# EUROPEAN PATENT SPECIFICATION

(11) **EP 3 779 703 B1**
(45) Date of publication and mention of the grant of the patent: **21.09.2022**
(21) Application number: 19781128.4
(22) Date of filing: 30.01.2019
(51) Int. Cl.: H04L 67/104

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 02.04.2018 JP 2018070786
(43) Date of publication of application: 17.02.2021
(73) Proprietor: Sony Group Corporation, Tokyo 108-0075 (JP)
(72) Inventor: TAKAHASHI, Koki, Tokyo 141-0031 (JP); WATANABE, Kazuhiro, Tokyo 141-0031 (JP); ISOZU, Masaaki, Tokyo 141-0031 (JP)
(74) Representative: 2SPL Patentanwälte PartG mbB
(86) International application number: PCT/JP2019/003210
(87) International publication number: WO 2019/193823

(56) References cited:
- WO-A1-2015/056102
- WO-A1-2018/049656
- JP-A- 2002 117 145
- JP-A- 2006 011 693
- JP-A- 2007 193 382
- JP-A- 2009 134 665

## Description

### Field

The present disclosure relates to an information processing apparatus, an information processing method, and a program.

### Background

In recent years, service using a peer-to-peer database including blockchain data has been actively developed. Examples of the service can include, for example, Bitcoin, or the like, in which blockchain data is used to exchange virtual currency. With the service using a peer-to-peer database including blockchain data, it is possible to prevent falsification, or the like, of data managed in the peer-to-peer database and guarantee authenticity of the data.

Patent Literature 1 discloses a file sharing system which can provide advantages of both a peer-to-peer type and a client-server (C/S) type. A user can easily discern which folder (storage unit) of the peer-to-peer type or the C/S type, each piece of data is stored in by using the system.

Patent Literature 1 discloses a blockchain-based identity authentication method,device, node and a system.

### Citation List

### Patent Literature

Patent Literature 1: JP 2006-11693 A
Patent Literature 2: WO 2018/049656 Al

Summary

### Technical Problem

However, with the technology, or the like, of Patent Literature 1, the user could not confirm authenticity of information regarding a registration destination of data (hereinafter, also referred to as "registration destination information" for descriptive purpose), provided from the system by himself/herself. Therefore, the user could not help but trust the registration destination information provided from the system, although there is also a possibility that the registration destination information provided from the system may be falsified.

Therefore, the present disclosure has been made in view of the above, and the present disclosure provides a new and improved information processing apparatus, information processing method, and program capable of confirming whether a registration destination of data is a peer-to-peer type database or a storage unit other than the peer-to-peer type database more appropriately.

### Solution to Problem

According to the present disclosure, an information processing apparatus is provided that includes: a requesting unit configured to request information regarding whether a registration destination of data is a P2P database or a storage unit other than the P2P database, to a plurality of targets which is different from each other; and an output control unit configured to control output of information obtained as a result of the request to a user.

Moreover, according to the present disclosure, an information processing method to be executed by a computer is provided that includes: requesting information regarding whether a registration destination of data is a P2P database or a storage unit other than the P2P database to a plurality of targets which is different from each other; and controlling output of information obtained as a result of the request to a user.

Moreover, according to the present disclosure, a program is provided that causes a computer to realize: requesting information regarding whether a registration destination of data is a P2P database or a storage unit other than the P2P database to a plurality of targets which is different from each other; and controlling output of information obtained as a result of the request to a user.

The invention is defined by the appended claims.

### Advantageous Effects of Invention

According to the present disclosure as described above, it is possible to confirm whether a registration destination of data is a peer-to-peer type database or a storage unit other than the peer-to-peer type database more appropriately.

Note that the effects described above are not necessarily limitative. With or in the place of the above effects, there may be achieved any one of the effects described in this specification or other effects that may be grasped from this specification.

### Brief Description of Drawings

FIG. 1 is a view explaining outline of blockchain data which is one type of a peer-to-peer database.
FIG. 2 is a view explaining outline of blockchain data which is one type of a peer-to-peer database.
FIG. 3 is a view explaining outline of blockchain data which is one type of a peer-to-peer database.
FIG. 4 is a view explaining a configuration example of an information processing system according to the present embodiment.
FIG. 5 is a block diagram illustrating a functional configuration example of a client apparatus 100 according to the present embodiment.
FIG. 6 is a block diagram illustrating a functional configuration example of a server apparatus 200 according to the present embodiment.
FIG. 7 is a block diagram illustrating a functional configuration example of a node apparatuses 300 according to the present embodiment.
FIG. 8 is a block diagram illustrating a functional configuration example of a storage apparatus 400 according to the present embodiment.
FIG. 9 is a sequence diagram illustrating an example of processing flow by respective apparatuses, regarding provision of data and registration destination information to a user.
FIG. 10 is a view illustrating an example of a UI indicating the registration destination information of the data.
FIG. 11 is a view illustrating an example of a UI indicating the registration destination information of the data.
FIG. 12 is a view illustrating an example of a UI indicating the registration destination information of the data.
FIG. 13 is a view illustrating an example of a UI indicating the registration destination information of the data.
FIG. 14 is a view illustrating an example of a UI indicating the registration destination information of the data.
FIG. 15 is a view illustrating an example of a UI indicating the registration destination information of the data.
FIG. 16 is a view illustrating an example of a UI indicating the registration destination information of the data.
FIG. 17 is a view illustrating an example of a UI indicating the registration destination information of the data.
FIG. 18 is a view illustrating an example of a UI indicating the registration destination information of the data.
FIG. 19 is a view illustrating an example of a UI indicating the registration destination information of the data.
FIG. 20 is a view illustrating an example of a UI indicating the registration destination information of the data.
FIG. 21 is a view illustrating an example of a UI indicating the registration destination information of the data.
FIG. 22 is a view illustrating an example of a UI to be used for confirmation to a second target as to the registration destination information of the data.
FIG. 23 is a view illustrating an example of a UI indicating history information regarding a postscript to the data.
FIG. 24 is a view illustrating an example of a UI to be used for registration of data in a P2P database 321.
FIG. 25 is a view illustrating an example of a UI to be used for registration of data in a P2P database 321.
FIG. 26 is a view illustrating an example of a UI indicating that data is undeletable.
FIG. 27 is a view illustrating an example of a UI indicating that data is undeletable.
FIG. 28 is a view illustrating an example of a UI indicating that registration of data in the P2P database 321 is being performed.
FIG. 29 is a view illustrating an example of a UI indicating that registration of data in the P2P database 321 is being performed.
FIG. 30 is a view illustrating an example of a UI indicating that registration of data in the P2P database 321 is being performed.
FIG. 31 is a view illustrating an example of a UI indicating that registration of data in the storage apparatus 400 is being performed.
FIG. 32 is a view illustrating an example of a UI indicating that registration of data in the storage apparatus 400 is being performed.
FIG. 33 is a block diagram illustrating a hardware configuration example of the information processing apparatus 900 which realizes the client apparatus 100, the server apparatus 200, the node apparatus 300 or the storage apparatus 400 according to the present embodiment.

### Description of Embodiments

Hereinafter, a preferred embodiment of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
1. Outline of peer-to-peer database
2. Embodiment
   2.1. Outline
   2.2. System configuration example
   2.3. Functional configuration example of client apparatus 100
   2.4. Functional configuration example of server apparatus 200
   2.5. Functional configuration example of node apparatus 300
   2.6. Functional configuration example of storage apparatus 400
   2.7. Processing flow
3. User interface example
   3.1. Example of UI indicating registration destination information of data
   3.2. Example of UI indicating result of confirmation to second target
   3.3. Example of UI indicating history information regarding postscript to data
   3.4. Example of UI to be used for registration of data in P2P database 321
   3.5. Example of UI indicating that data is undeletable
   3.6. Example of UI indicating that registration of data in P2P database 321 is being performed
4. Hardware configuration example
5. Conclusion

### <1. Outline of peer-to-peer database>

Before an embodiment of the present disclosure is described, first, outline of a peer-to-peer database will be described.

In an information processing system according to the present embodiment, a distributed peer-to-peer database which is distributed in a peer-to-peer network is utilized. Note that there is also a case where the peer-to-peer network is referred to as a peer-to-peer distributed file system. In the following description, there is a case where the peer-to-peer network will be expressed as a "P2P network", and the peer-to-peer database will be expressed as a "P2P database". Examples of the P2P database can include blockchain data which is distributed in the P2P network. Therefore, first, outline of a blockchain system will be described as an example.

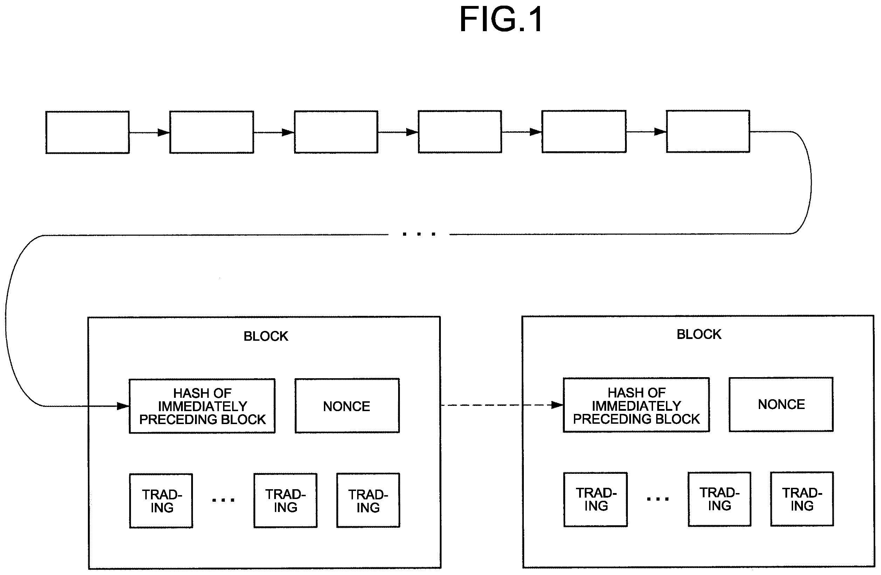

As illustrated in FIG. 1, the blockchain data is data in which a plurality of blocks is included like a chain. In each block, one or two or more pieces of target data can be stored as transaction (trading).

Examples of the blockchain data can include, for example, blockchain data to be used for exchanging data of virtual currency such as Bitcoin. The blockchain data to be used for exchanging data of virtual currency includes, for example, values called hash of an immediately preceding block, and a nonce. The hash of the immediately preceding block is information to be used for determining whether or not the block is a "correct block" correctly continuing from the immediately preceding block. The nonce is information to be used for preventing spoofing in authentication using the hash, and falsification is prevented by the use of the nonce. Examples of the nonce can include, for example, a character string, a number string, data indicating combination of these, or the like.

Further, in the blockchain data, spoofing is prevented by an electronic signature using an encryption key being provided to data of respective transactions. Further, the data of the respective transactions are made public and shared in the whole P2P network. Note that the data of the respective transactions may be encrypted using an encryption key.

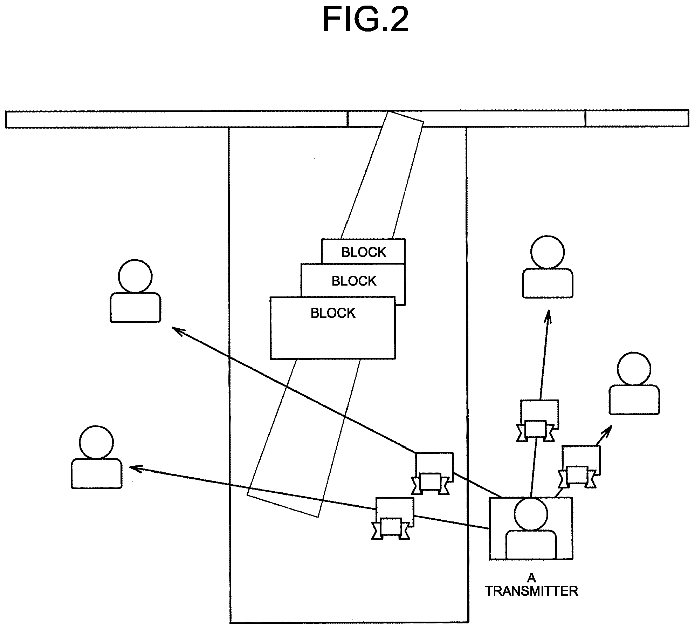

FIG. 2 is a view illustrating an aspect where target data is registered by a user A in the blockchain system. The user A provides an electronic signature generated using a private key of the user A to the target data to be registered in the blockchain data. Then, the user A broadcasts a transaction including the target data to which the electronic signature is provided on the P2P network. By this means, it is guaranteed that a holder of the target data is the user A.

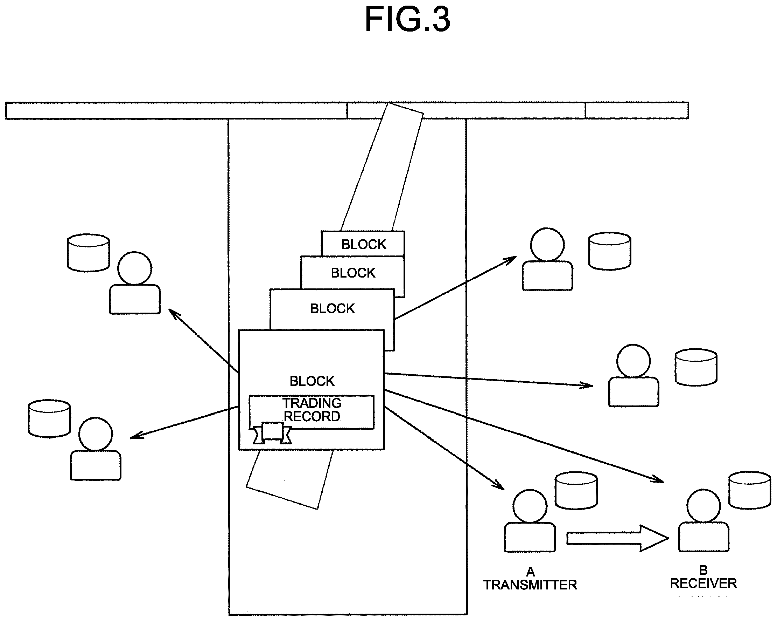

FIG. 3 is a view illustrating an aspect where the target data is transferred from the user A to a user B in the blockchain system. The user A puts a public key of the user B in a transaction by providing the electronic signature generated using the private key of the user A to the transaction. By this means, it is indicated that the target data is transferred from the user A to the user B. Further, the user B may acquire a public key of the user A from the user A to acquire the target data to which the electronic signature is provided or which is encrypted upon trading of the target data.

Further, in the blockchain system, it is also possible to put other target data different from virtual currency in the blockchain data to be used for exchanging existing data of virtual currency such as the blockchain data of Bitcoin, by utilizing, for example, a side chain technology.

### <2. Embodiment>

Outline of the P2P database has been described above. Subsequently, an embodiment of the present disclosure will be described.

### (2.1. Outline)

First, outline of an embodiment of the present disclosure will be described.

As described above, in recent years, service using a P2P database including blockchain data has been actively developed. Further, it is possible to guarantee authenticity of data managed by the P2P database.

However, it is considered that an information processing system is constructed also using storage units (such as, for example, databases, or the like, including a relational database. Hereinafter, also referred to as "other storage units" for descriptive purpose) other than the P2P database as well as the P2P database for reasons of processing performance (such as, for example, processing speed), storage capacity, operational constraints, or the like.

In a case where the P2P database and other storage units are used together in the information processing system, because reliability (or authenticity) of registered data is different between the P2P database and other storage units, there is a case where a user needs to recognize whether a registration destination of the data is the P2P database or other storage units.

Here, with the technology, or the like, of Patent Literature 1, the user can easily discern which folder (storage unit) of a peer-to-peer type or a C/S type, each piece of data is stored in. However, with the technology, or the like, of Patent Literature 1, the user could not confirm authenticity of registration destination information of data, provided from the system by himself/herself. Therefore, the user could not help but trust the registration destination information provided from the system, although there is also a possibility that the registration destination information provided from the system may be falsified.

Thus, in view of the above-described circumstances, a discloser of the present disclosure has reached creation of the technology according to the present disclosure. According to the present disclosure, it is possible to request information regarding whether a registration destination of data is the P2P database or other storage units, to a plurality of targets which is different from each other, and output information obtained as a result of the request to the user. By this means, the user can confirm authenticity of registration destination information of data, provided from the system by himself/herself. That is, the present disclosure enables more appropriate confirmation as to whether a registration destination of data is the P2P database or other storage units. The present disclosure will be described in detail below.

### (2.2. System configuration example)

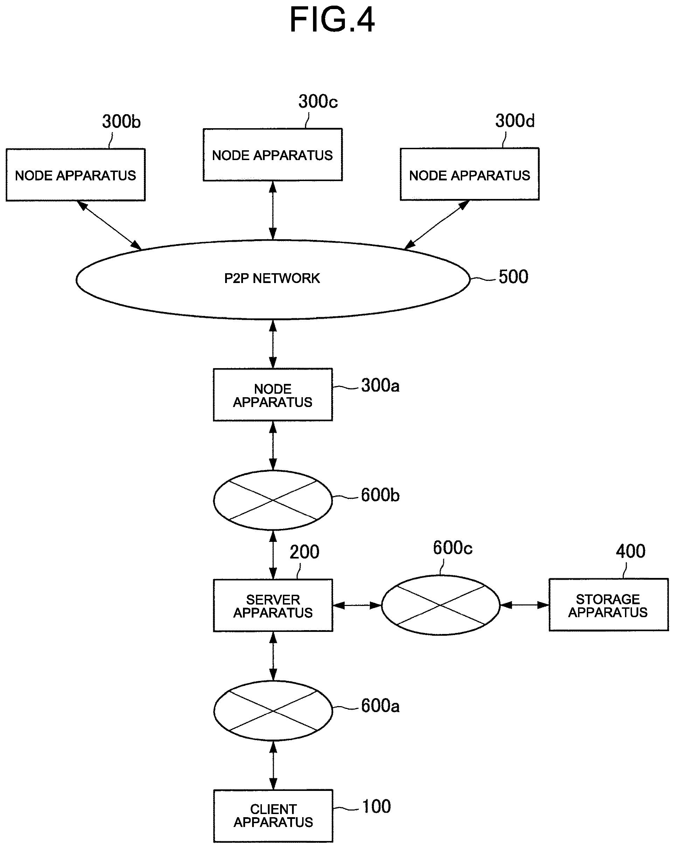

The outline of the present embodiment has been described above. Subsequently, a configuration example of an information processing system according to the present embodiment will be described with reference to FIG. 4.

As illustrated in FIG. 4, the information processing system according to the present embodiment includes a client apparatus 100, a server apparatus 200, a plurality of node apparatuses 300 (in the drawing, a node apparatus 300a to node apparatus 300d), and a storage apparatus 400. Further, the plurality of node apparatuses 300 is respectively connected to a P2P network 500. Still further, the client apparatus 100 is connected to the server apparatus 200 via a network 600a, the server apparatus 200 is connected to the node apparatus 300a via a network 600b, and the server apparatus 200 is connected to the storage apparatus 400 via a network 600c.

Note that a configuration of the information processing system according to the present embodiment is not limited to the configuration in FIG. 4. For example, the number of respective apparatuses which constitute the information processing system may be changed as appropriate. Further, the server apparatus 200 may be connected to the node apparatus 300 other than the node apparatus 300a.

While content of service which can be provided by the information processing system is not particularly limited, in the present specification, a case will be considered as an example where the information processing system provides management service such as academic achievement records of students (for example, records regarding test results, total units earned, acquired qualifications, or the like), and activity records of students (for example, records regarding club activity, student-body activity, attendance, or the like) (hereinafter, referred to as "academic achievement and activity record service" for descriptive purpose), to respective educational institutions (such as, for example, a nursery school, a kindergarten, an elementary school, a junior high school, a high school, a university, a graduate school, a cram school, a preparatory school and a school for acquiring qualifications). That is, the user who utilizes the information processing system includes teachers, or the like, who belong to the respective educational institutions, but not limited to these. For example, the user who utilizes the information processing system may include a student himself/herself, parents of the student, an arbitrary company which tries to utilize the academic achievement records of students, or the like.

It is assumed that, in the information processing system according to the present embodiment, data of higher importance which requires guaranty of authenticity is managed at the P2P database provided at the node apparatus 300, and other data is managed at the storage apparatus 400.

### (Client apparatus 100)

The client apparatus 100 is an information processing apparatus to be used by a user who receives provision of academic achievement and activity record service. For example, the user can acquire data regarding academic achievement records or activity records of students registered in the P2P database or the storage apparatus 400 via the server apparatus 200 by performing input operation on the client apparatus 100, and also recognize whether a registration destination of the data is the P2P database or the storage apparatus 400.

More specifically, in a case where the user performs input operation to request desired data, on the client apparatus 100, the client apparatus 100 transmits a request signal for requesting the data to the server apparatus 200. The request signal is also a signal to request for registration destination information regarding whether the registration destination of the data is the P2P database or the storage apparatus 400. The server apparatus 200 which has received the request signal acquires target data from the P2P database provided to the node apparatus 300 or the storage apparatus 400 and provides the data to the client apparatus 100 along with the registration destination information. The client apparatus 100 provides the data and the registration destination information to the user via an output unit (such as, for example, a display apparatus such as a display, a sound output apparatus such as a speaker, a light source apparatus such as a lamp, and a tactile sense presentation apparatus such as an actuator), which functions as a user interface (hereinafter, also referred to as a "UI" for descriptive purpose). By this means, the user can not only acquire desired data but also can recognize registration destination information of the acquisition source of the data.

Further, in the present embodiment, the user can confirm authenticity of registration destination information of data, provided from the server apparatus 200 by himself/herself. For example, the client apparatus 100 requests registration destination information to a target different from the above by the user performing predetermined input operation.

Here, the "target" to which the client apparatus 100 requests the registration destination information indicates the node apparatus 300 connected to the P2P network 500, a predetermined apparatus (such as, for example, a predetermined server apparatus) which can access the node apparatus 300, predetermined software (such as, for example, a predetermined application programming interface (API)), or the like.

That is, while, in the above, the client apparatus 100 requests the registration destination information to a node apparatus 300a via the server apparatus 200 (it may be understood that a target to which the registration destination information is requested is the server apparatus 200), through the subsequent input operation by the user, the client apparatus 100 requests the registration destination information to the node apparatus 300 different from the previous apparatus (or the server apparatus 200 different from the previous apparatus). By this means, even in a case where the registration destination information previously provided to the client apparatus 100 has been falsified, the user can recognize occurrence of falsification on the basis of the registration destination information provided from a different target.

Hereinafter, a target to which the client apparatus 100 requests the registration destination information via the server apparatus 200 will be defined as a "first target", and a target to which the client apparatus 100 requests the registration destination information thereafter, which is different from the previous target, will be defined as a "second target". Note that the target to which the client apparatus 100 requests the registration destination information is not limited to the above-described examples.

Here, the "registration destination information" according to the present embodiment is "information regarding whether a registration destination of target data is the P2P database or the storage apparatus 400". Further, the "registration destination information" (that is, "information regarding whether the registration destination of the target data is the P2P database or the storage apparatus 400") may be interpreted as concept including "information regarding whether or not the registration destination of the target data is the P2P database" or "information regarding whether or not the registration destination of the target data is the storage apparatus 400". Further, in a case where there is a plurality of P2P databases in the information processing system (for example, in a case where there is a plurality of P2P networks 500), the "registration destination information" may be interpreted as concept including "information regarding which P2P database (or P2P network 500) is the registration destination of the target data".

Here, content of the registration destination information to be requested to the first target may be the same as or different from content of the registration destination information to be requested to the second target. For example, the registration destination information to be requested to the first target may be "information regarding whether the registration destination of the target data is the P2P database or the storage apparatus 400", and the registration destination information to be requested to the second target may be "information regarding whether or not the registration destination of the target data is the P2P database (whether or not the target data is surely registered in the P2P database)".

Further, while it has been described above that request of the registration destination information to the first target or the second target is performed on the basis of input operation by the user, a requesting method is not necessarily limited to this. More specifically, request of the registration destination information to the first target or the second target may be performed on the basis of a trigger other than input operation by the user or may be automatically (or autonomously) performed. For example, request of the registration destination information to the first target may be performed by being triggered by processing of software running on the client apparatus 100. Further, in a case where the registration destination information is provided from the first target, the client apparatus 100 may automatically (or autonomously) request the registration destination information to the second target.

Further, concerning the "request of the registration destination information", a request signal transmitted from the client apparatus 100 does not have to include information indicating that the registration destination information is requested. For example, if the client apparatus 100 can acquire the registration destination information from the server apparatus 200 as a result of the client apparatus 100 transmitting some kind of signal to the server apparatus 200, it may be interpreted as "request of the registration destination information" being performed.

Here, while it is basically assumed that the user who uses the client apparatus 100 is an individual, the user is not limited to this. For example, the user includes an arbitrary organization or an arbitrary group (such as, for example, a company, an association, and a circle).

Note that a type of the client apparatus 100 is not particularly limited. For example, the client apparatus 100 may be an arbitrary apparatus such as a general-purpose computer, a personal computer (PC), and a tablet PC. Further, processing content of the client apparatus 100 described above can be changed as appropriate.

### (Server apparatus 200)

The server apparatus 200 is an information processing apparatus which provides various kinds of functions in academic achievement and activity record service to the client apparatus 100. For example, in a case where the server apparatus 200 receives a request signal from the client apparatus 100, the server apparatus 200 recognizes requested content by analyzing the request signal and acquires data regarding academic achievement records or activity records of students by transmitting a request signal for requesting target data to the node apparatus 300 or the storage apparatus 400 on the basis of the requested content. Then, the server apparatus 200 transmits registration destination information of the data to the client apparatus 100 along with the data.

Note that processing content of the server apparatus 200 is not limited to the above. For example, the server apparatus 200 may acquire data by transmitting a request signal to both the node apparatus 300 and the storage apparatus 400 without analyzing the request signal received from the client apparatus 100. Further, the server apparatus 200 may acquire data from the node apparatus 300 or the storage apparatus 400 and provide the data to the client apparatus 100 also in a case where the server apparatus 200 does not receive a request signal from the client apparatus 100. Further, in a similar manner to the client apparatus 100, a type of the server apparatus 200 is not particularly limited.

### (Node apparatus 300)

The node apparatus 300 is an information processing apparatus which is connected to the P2P network 500 and which holds a P2P database. In the P2P database provided at the node apparatus 300, data regarding academic achievement records, activity records, or the like, of students are registered. Note that content of data registered in the P2P database is not limited to these.

Then, the node apparatus 300 acquires data from the P2P database and registers data in the P2P database. Concerning acquisition of data, in a case where the node apparatus 300 receives a request signal from the server apparatus 200, the node apparatus 300 acquires data designated by the request signal from the P2P database and provides the data to the server apparatus 200. Further, concerning registration of data, in a case where the node apparatus 300 receives a request signal concerning registration of data from the server apparatus 200, the node apparatus 300 registers data included in the request signal in the P2P database. Note that a case where the node apparatus 300 acquires data from the P2P database and a case where the node apparatus 300 registers data in the P2P database are not limited to the above. For example, the node apparatus 300 may acquire data from the P2P database and may provide the data to the server apparatus 200 also in a case where the node apparatus 300 does not receive a request signal from the server apparatus 200.

Note that, in a case where the node apparatus 300 registers data in the P2P database, acquires data from the P2P database, or the like, the node apparatus 300 basically uses a predetermined program which is provided at the P2P database and which is to be executed on the P2P database (hereinafter, referred to as a "P2P database program" for descriptive purpose). By the P2P database program being used, for example, various kinds of processing including exchange of virtual currency such as Bitcoin is realized in accordance with a predetermined rule. Further, by the P2P database program being provided at the P2P database, a risk of the program being fraudulently modified is reduced.

While the P2P database program is a chain code in Hyperledger, the P2P database program is not limited to this. For example, the P2P database program may indicate a smart contract. Note that the node apparatus 300 may realize acquire data from the P2P database and register data in the P2P database using a program other than the P2P database program as appropriate. In addition, similar to the client apparatus 100, type of the node apparatus 300 is not particularly limited.

Further, while, in the present embodiment, description will be provided assuming a case where a plurality of node apparatuses 300 has the same functions, the respective node apparatuses 300 may have functions different from each other. For example, it is also possible to provide a node apparatus 300 (such as, for example, an Endorsing Peer) which approves registration of data in the P2P database, a node apparatus 300 (such as, for example, an Ordering Peer) which instructs the respective node apparatuses 300 to perform registration after approval, and a node apparatus 300 (such as, for example, a Committing Peer) which registers data in the P2P database.

### (Storage apparatus 400)

The storage apparatus 400 is a predetermined storage apparatus which is used along with the P2P database in the information processing system according to the present embodiment. More specifically, the storage apparatus 400 can store various kinds of data provided to the client apparatus 100 via the server apparatus 200. Data to be stored in the storage apparatus 400 is, for example, data regarding academic achievement records, activity records, or the like, of students. Note that content of data to be stored in the storage apparatus 400 is not limited to these. In a case where the storage apparatus 400 receives a request signal from the server apparatus 200, the storage apparatus 400 acquires data designated by the request signal and provides the data to the server apparatus 200. Note that processing content of the storage apparatus 400 is not limited to the above. For example, the storage apparatus 400 may provide arbitrary data to the server apparatus 200 also in a case where the storage apparatus 400 does not receive a request signal from the server apparatus 200. Further, in a similar manner to the client apparatus 100, a type of the storage apparatus 400 is not particularly limited.

### (P2P network 500)

The P2P network 500 is a network on which the P2P databases are distributed. As described above, the respective node apparatuses 300 can update the P2P databases by connecting the P2P network 500 while maintaining consistency with the P2P databases held by other node apparatuses 300.

Note that a type of the P2P network 500 is not particularly limited. For example, the P2P network 500 may be one of a consortium type operated by a plurality of organizations, a private type operated by a single organization and a public type for which participants are not particularly limited.

Note that a communication scheme, a type of a line, and the like, to be used in the P2P network 500 is not particularly limited. For example, the P2P network 500 may be realized with a leased line network such as an Internet protocol-virtual private network (IP-VPN). Further, the P2P network 500 may be realized with a public network such as the Internet, a telephone network, a satellite communication network, various kinds of local area networks (LANs) including Ethernet (registered trademark), a wide area network (WAN), or the like. Still further, the P2P network 500 may be realized with a wireless communication network such as Wi-Fi (registered trademark) or Bluetooth (registered trademark).

### (Network 600)

The network 600 is a network which connects between the client apparatus 100 and the server apparatus 200, the server apparatus 200 and the node apparatus 300, and the server apparatus 200 and the storage apparatus 400. Note that, in a similar manner to the P2P network 500, a communication scheme, a type of a line, and the like to be used at the network 600 is not particularly limited.

The configuration example of the information processing system according to the present embodiment has been described above. Note that the above-described configuration described with reference to FIG. 4 is merely an example, and the configuration of the information processing system according to the present embodiment is not limited to this example. For example, all or part of the functions of the client apparatus 100 may be provided at the server apparatus 200. For example, software which provides all or part of the functions of the client apparatus 100 may be executed on the server apparatus 200. Further, inversely, all or part of the functions of the server apparatus 200 may be provided at the client apparatus 100. The configuration of the information processing system according to the present embodiment can be flexibly transformed in accordance with specifications and operation.

### (2.3. Functional configuration example of client apparatus 100)

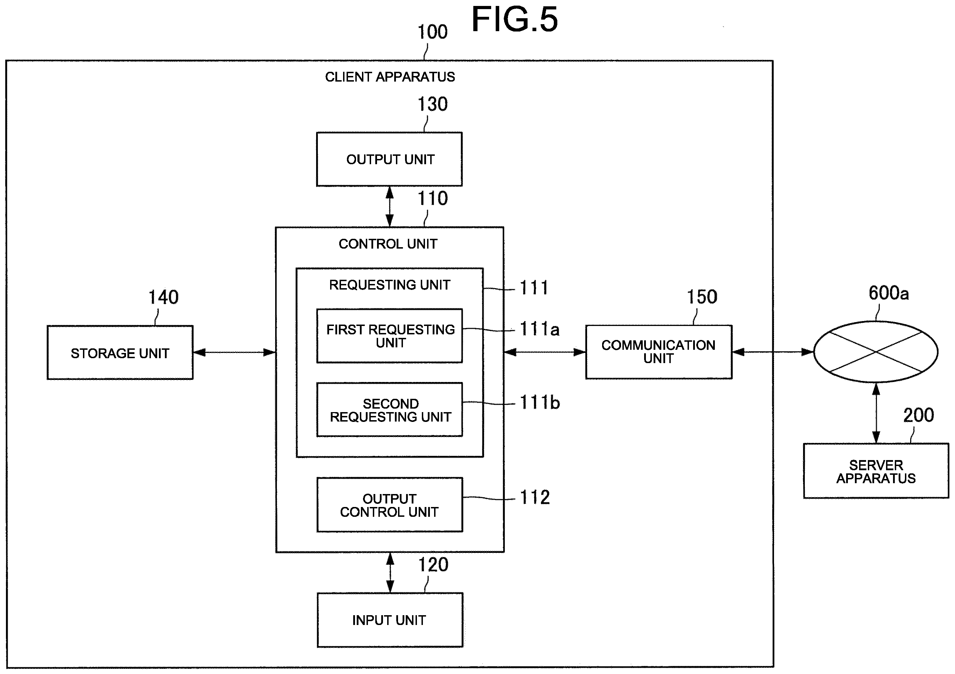

The configuration example of the information processing system according to the present embodiment has been explained in the above description. Subsequently, a functional configuration example of the client apparatus 100 will be described with reference to FIG. 5.

As illustrated in FIG. 5, the client apparatus 100 includes a control unit 110, an input unit 120, an output unit 130, a storage unit 140, and a communication unit 150.

### (Control unit 110)

The control unit 110 is a functional component which comprehensively controls overall processing performed by the client apparatus 100. For example, the control unit 110 can control start-up and stop of an output unit 130, the communication unit 150, or the like, using a control signal. Note that control content of the control unit 110 is not limited to these. For example, the control unit 110 may control processing which is typically performed at various kinds of servers, a general-purpose computer, a PC, a tablet PC, or the like.

Further, as illustrated in FIG. 5, the control unit 110 includes a requesting unit 111 and an output control unit 112.

### (Requesting unit 111)

The requesting unit 111 is a functional component which performs various kinds of request including acquisition, registration of data, confirmation as to whether or not data is registered, or the like, to an external apparatus. As illustrated in FIG. 5, the requesting unit 111 includes a first requesting unit 111a and a second requesting unit 111b.

### (First requesting unit 111a)

The first requesting unit 111a is a functional component which performs various kinds of request including acquisition, registration of data, confirmation as to whether or not data is registered, or the like, to the first target. More specifically, in a case where the user performs input operation for requesting acquisition of desired data using the input unit 120, the first requesting unit 111a generates a request signal for requesting acquisition of data on the basis of the input operation and transmits the signal to the server apparatus 200 via the communication unit 150. By this means, the first requesting unit 111a can realize acquisition of the desired data from the node apparatus 300 or the storage apparatus 400, and acquisition of registration destination information of the data.

Further, in a case where the user performs input operation for requesting registration of desired data using the input unit 120, the first requesting unit 111a generates a request signal for requesting registration of the data and transmits the signal to the server apparatus 200 via the communication unit 150. By this means, the first requesting unit 111a can realize registration of the desired data in the node apparatus 300 or the storage apparatus 400. Here, while the user cannot basically perform deletion, correction, or the like, of data registered in the P2P database, the user can add a postscript to the data registered in the P2P database (for example, it is possible to add a postscript indicating that data is deleted or corrected). The first requesting unit 111a can realize addition of the postscript by generating a request signal for requesting addition of a postscript to data registered in the P2P database and transmitting the signal to the server apparatus 200 via the communication unit 150.

### (Second requesting unit 111b)

The second requesting unit 111b is a functional component which performs various kinds of request including acquisition, registration of data, confirmation as to whether or not data is registered, or the like, to a second target. More specifically, the second requesting unit 111b, in a case where the user who has confirmed the registration destination information obtained as a result of request to the first target performs input operation for requesting registration destination information of desired data using the input unit 120, the second requesting unit 111b generates a request signal for requesting the registration destination information and transmits the signal to the second target via the communication unit 150. By this means, the user can confirm authenticity of the registration destination information of the data, provided from the server apparatus 200 by himself/herself.

### (Output control unit 112)

The output control unit 112 is a functional component which controls output of data obtained as a result of request by the first requesting unit 111a or the second requesting unit 111b, to the user (in other words, the output control unit 112 controls provision of a UI). More specifically, the output control unit 112 controls output of user desired data obtained as a result of request by the first requesting unit 111a, and registration destination information of the data, or controls output of registration destination information obtained as a result of request by the second requesting unit 111b. In this event, in a case where acquisition of the registration destination information is failed (or in a case where a registration destination of the data is unknown), the output control unit 112 may control output of the information indicating that the acquisition is failed or the registration destination is unknown.

The output control unit 112 controls output of the registration destination information, or the like, by controlling a display apparatus such as a display, a sound output apparatus such as a speaker, a light source apparatus such as a lamp, a tactile sense presentation apparatus such as an actuator, or the like, provided at the output unit 130. Specific examples of a UI to be realized by the output control unit 112 will be described later. Note that, as described above, the server apparatus 200 may control provision of the UI by the output control unit 112 being provided at the server apparatus 200.

### (Input unit 120)

The input unit 120 is a functional component which receives input by a user. For example, the input unit 120 includes an input apparatus such as a mouse, a keyboard, a touch panel, a button, a switch and a microphone, and the user can perform input operation for acquiring desired data or requesting registration, or the like, by using these input apparatuses. Note that the input apparatus provided at the input unit 120 is not particularly limited.

### (Output unit 130)

The output unit 130 is a functional component which outputs data obtained as a result of request by the first requesting unit 111a or the second requesting unit 111b to the user by being controlled by the output control unit 112 (in other words, the output unit 130 provides a UI). For example, the output unit 130 includes a display apparatus such as a display, a sound output apparatus such as a speaker, a light source apparatus such as a lamp, a tactile sense presentation apparatus such as an actuator, or the like, and outputs data requested by the user or registration destination information, or the like, of the data on the basis of control by the output control unit 112. Note that output means provided at the output unit 130 is not limited to these.

### (Storage unit 140)

The storage unit 140 is a functional component which stores various kinds of data. For example, the storage unit 140 stores data obtained as a result of request by the first requesting unit 111a or the second requesting unit 111b, registration destination information, or the like, of the data, or stores programs, parameters, or the like, to be used by respective functional components of the client apparatus 100. Note that data stored in the storage unit 140 is not limited to these.

### (Communication unit 150)

The communication unit 150 is a functional component which controls various kinds of communication with an external apparatus. For example, the communication unit 150 transmits the request signal generated by the first requesting unit 111a to the server apparatus 200, and receives a response signal including data designated by the request signal, registration destination information, or the like, of the data. Further, the communication unit 150 transmits the request signal generated by the second requesting unit 111b to the second target (or an external apparatus, or the like, which can perform communication with the second target) and receives a response signal including registration destination information, or the like, of data designated by the request signal. Note that data to be communicated by the communication unit 150 and a case where the communication unit 150 performs communication are not limited to these.

The functional configuration example of the client apparatus 100 has been described above. Note that the above-described functional configuration described using FIG. 5 is merely an example, and the functional configuration example of the client apparatus 100 is not limited to this example. For example, the client apparatus 100 does not necessarily have to include all the components illustrated in FIG. 5. Further, the functional configuration of the client apparatus 100 can be flexibly transformed in accordance with specifications and operation.

### (2.4. Functional configuration example of server apparatus 200)

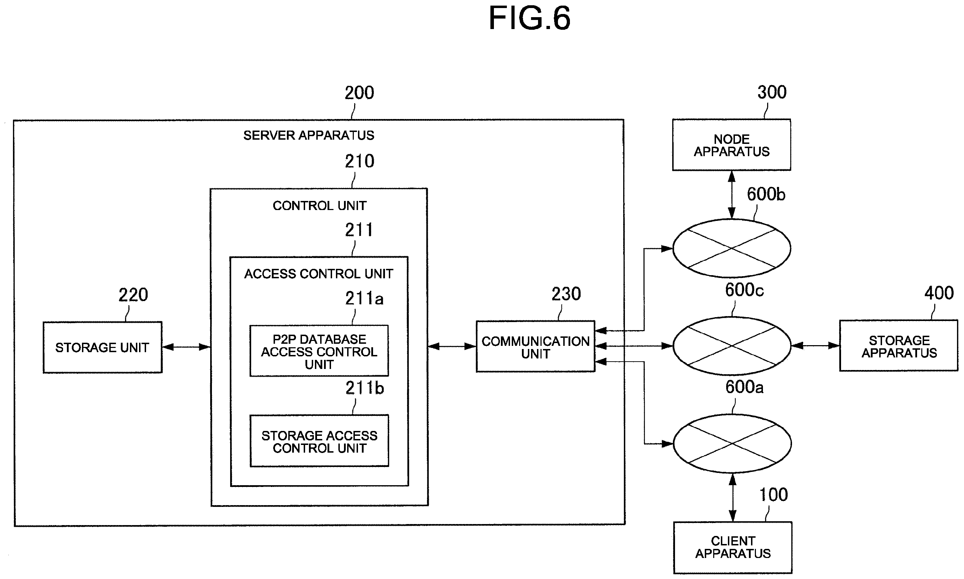

The functional configuration example of the client apparatus 100 has been described in the above description. Subsequently, a functional configuration example of the server apparatus 200 will be described with reference to FIG. 6.

As illustrated in FIG. 6, the server apparatus 200 includes a control unit 210, a storage unit 220 and a communication unit 230.

### (Control unit 210)

The control unit 210 is a functional component which comprehensively controls overall processing performed by the server apparatus 200. For example, the control unit 210 can control start-up and stop of an output unit (not illustrated), the communication unit 230, or the like, using a control signal. Further, in the present embodiment, the control unit 210 realizes acquisition of data, or the like, from the node apparatus 300 or the storage apparatus 400 by an access control unit 211 being provided. Further, the control unit 210 provides a response signal including the data acquired from the node apparatus 300 or the storage apparatus 400 and response signal including registration destination information of the data to the client apparatus 100 via the communication unit 230. Note that control content of the control unit 210 is not limited to these. For example, the control unit 210 may control processing which is typically performed at various kinds of servers, a general-purpose computer, a PC, a tablet PC, or the like.

### (Access control unit 211)

The access control unit 211 is a functional component which controls access to the node apparatus 300 or the storage apparatus 400, and includes a P2P database access control unit 211a and a storage access control unit 211b. Further, when the server apparatus 200 receives a request signal from the client apparatus 100, the access control unit 211 recognizes requested content by analyzing the request signal. Then, in a case where it is necessary to acquire data, or the like, from the P2P database, the access control unit 211 realizes access to the P2P database using the P2P database access control unit 211a. Further, in a case where it is necessary to acquire data, or the like, from the storage apparatus 400, the access control unit 211 realizes access to the storage apparatus 400 using the storage access control unit 211b. Note that the P2P database access control unit 211a and the storage access control unit 211b provided at the access control unit 211 may be integrated to be embodied as one functional component.

### (P2P database access control unit 211a)

The P2P database access control unit 211a is a functional component which realizes access to the P2P database on the basis of the request signal from the client apparatus 100. More specifically, in a case where it is judged that it is necessary to acquire data from the P2P database through analysis of the request signal from the client apparatus 100, the P2P database access control unit 211a generates a new request signal for requesting acquisition of data, or the like, on the basis of the requested content, and transmits the request signal to the node apparatus 300. By this means, the P2P database access control unit 211a realizes acquisition of data, or the like, from the P2P database, or registration of data in the P2P database. Note that the above-described processing by the P2P database access control unit 211a can be changed as appropriate. For example, the P2P database access control unit 211a may transmit the request signal transmitted from the client apparatus 100 as is to the node apparatus 300 without generating a new request signal. Further, the P2P database access control unit 211a may access the P2P database also in a case where the server apparatus 200 does not receive a request signal from the client apparatus 100.

### (Storage access control unit 211b)

The storage access control unit 211b is a functional component which realizes access to the storage apparatus 400 on the basis of the request signal from the client apparatus 100. More specifically, in a case where it is judged that it is necessary to acquire data from the storage apparatus 400 through analysis of the request signal from the client apparatus 100, the storage access control unit 211b generates a new request signal for requesting acquisition of data, or the like, on the basis of the requested content and transmits the request signal to the storage apparatus 400. By this means, the storage access control unit 211b realizes acquisition of data, or the like, from the storage apparatus 400 or registering data in the storage apparatus 400. Note that the above-described processing by the storage access control unit 211b can be changed as appropriate. For example, in a similar manner to the P2P database access control unit 211a, the storage access control unit 211b may transmit the request signal transmitted from the client apparatus 100 as is to the storage apparatus 400 without generating a new request signal. Further, the storage access control unit 211b may access the storage apparatus 400 also in a case where the server apparatus 200 does not receive a request signal from the client apparatus 100.

### (Storage unit 220)

The storage unit 220 is a functional component which stores various kinds of data. For example, the storage unit 220 stores a request signal from the client apparatus 100, data acquired from the P2P database or the storage apparatus 400, stores registration destination information of the data, or stores programs, parameters, or the like, to be used by respective functional components of the server apparatus 200. Note that data stored in the storage unit 220 is not limited to these.

### (Communication unit 230)

The communication unit 230 is a functional component which controls various kinds of communication with an external apparatus. For example, the communication unit 230 receives a request signal for requesting acquisition of user desired data from the client apparatus 100. Then, the communication unit 230 transmits the request signal generated by the P2P database access control unit 211a to the node apparatus 300, and receives a response signal including data, or the like, designated by the request signal. Further, the communication unit 230 transmits the request signal generated by the storage access control unit 211b to the storage apparatus 400 and receives a response signal including data, or the like, designated by the request signal. Thereafter, the communication unit 230 transmits a response signal including the data acquired from the node apparatus 300 or the storage apparatus 400, and the registration destination information, to the client apparatus 100. Note that data communicated by the communication unit 230 and a case where the communication unit 230 performs communication are not limited to these.

The functional configuration example of the server apparatus 200 has been described above. Note that the above-described functional configuration described using FIG. 6 is merely an example, and the functional configuration example of the server apparatus 200 is not limited to this example. For example, the server apparatus 200 does not necessarily have to include all the components illustrated in FIG. 6. Further, the functional configuration of the server apparatus 200 can be flexibly transformed in accordance with specifications and operation.

### (2.5. Functional configuration example of node apparatus 300)

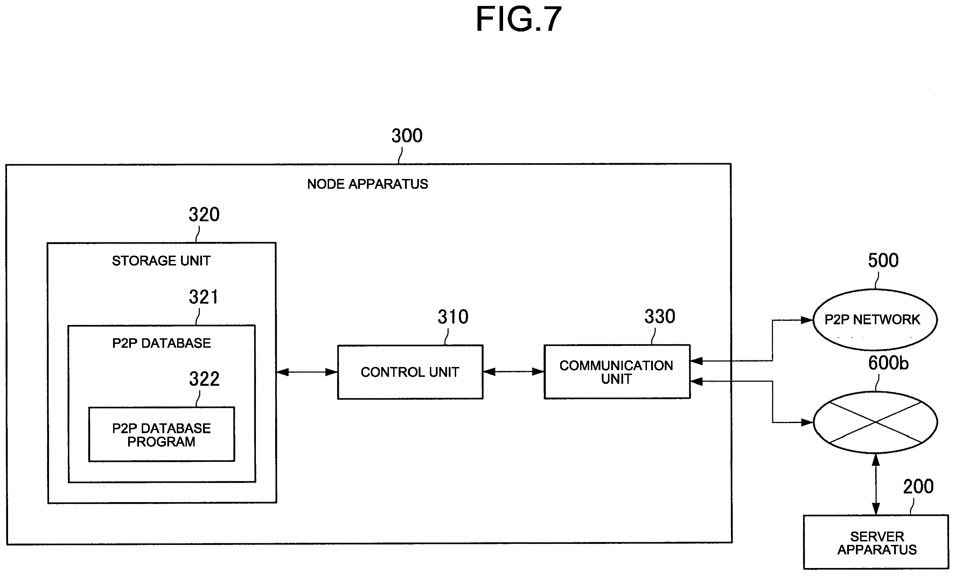

The functional configuration example of the server apparatus 200 has been described in the above description. Subsequently, a functional configuration example of the node apparatus 300 will be described with reference to FIG. 7.

As illustrated in FIG. 7, the node apparatus 300 includes a control unit 310, a storage unit 320 and a communication unit 330.

### (Control unit 310)

The control unit 310 is a functional component which comprehensively controls overall processing performed by the node apparatus 300. For example, the control unit 310 can control start-up and stop of an output unit (not illustrated), the communication unit 330, or the like, using a control signal. Further, the control unit 310 controls processing of acquiring data from the P2P database 321 or processing of registering data in the P2P database 321 on the basis of the request signal provided from the server apparatus 200. In this event, the control unit 310 may control these kinds of processing (processing of acquiring data or processing of registering data) on the basis of access authority, or the like, of the user. Note that control content of the control unit 310 is not limited to these. For example, the control unit 310 may control processing which is typically performed at various kinds of servers, a general-purpose computer, a PC, a tablet PC, or the like.

### (Storage unit 320)

The storage unit 320 is a functional component which stores various kinds of data. For example, the storage unit 320 stores programs, parameters, or the like, to be used by respective functional components of the node apparatus 300. Note that content of data stored in the storage unit 320 is not limited to these. As illustrated in FIG. 7, the storage unit 320 includes a P2P database 321.

### (P2P database 321)

The P2P database 321 is a database held in common by each of the node apparatus 300, and is, for example, blockchain data. As described above, in the P2P database 321, data of higher importance such as data for which guaranty for authenticity is asked among academic achievement records, activity records, or the like, of students is registered. An electronic signature generated using an encryption key may be provided to various kinds of data to be registered in the P2P database 321 or the data may be encrypted using an encryption key. Note that the data to be registered in the P2P database 321 is not limited to these. For example, in a case where charging is performed when data is acquired from the P2P database 321 or when data is registered in the P2P database 321, data regarding assets possessed by each user (for example, coins in Bitcoin) may be registered in the P2P database 321. As illustrated in FIG. 7, the P2P database 321 includes a P2P database program 322.

### (P2P database program 322)

The P2P database program 322 is a predetermined program which is provided at the P2P database 321 and which is to be executed on the P2P database 321. By the P2P database program 322 being used, various kinds of processing including exchange of virtual currency such as, for example, Bitcoin is realized in accordance with a predetermined rule while consistency is maintained. Concerning the predetermined rule, for example, the P2P database program 322 may perform approval processing or charging processing based on the predetermined rule by cooperating with other node apparatuses 300 upon registration of data or upon acquisition of data. Further, by the P2P database program 322 being provided at the P2P database 321, a risk of the program being fraudulently modified is reduced. While the P2P database program 322 is a chain code at Hyperledger, the P2P database program 322 is not limited to this. For example, the P2P database program 322 may indicate a smart contract.

The P2P database program 322 can realize overall processing to be performed for the P2P database 321. For example, the P2P database program 322 can realize acquisition processing of various data, registration processing of various data, or the like, which is to be performed by accessing the P2P database 321. Note that the processing to be realized by the P2P database program 322 is not limited to the above. Development language of the P2P database program 322, the number of P2P database programs 322 provided on the P2P database 321, or the like, are not particularly limited.

### (Communication unit 330)

The communication unit 330 is a functional component which controls various kinds of communication with an external apparatus. For example, the communication unit 330 receives a request signal from the server apparatus 200, and transmits data acquired on the basis of the request signal to the server apparatus 200. Further, the communication unit 330 transmits/receives data, or the like, to be used for updating of the P2P database 321 (such as, for example, data to be used for consensus building) in communication with other node apparatuses 300. Note that data to be communicated by the communication unit 330 and a case where the communication unit 330 performs communication are not limited to these.

The functional configuration example of the node apparatus 300 has been described above. Note that the above-described functional configuration described using FIG. 7 is merely an example, and the functional configuration example of the node apparatus 300 is not limited to this example. For example, the node apparatus 300 does not necessarily have to include all the components illustrated in FIG. 7. Further, the functional configuration of the node apparatus 300 can be flexibly transformed in accordance with specifications and operation.

### (2.6. Functional configuration example of storage apparatus 400)

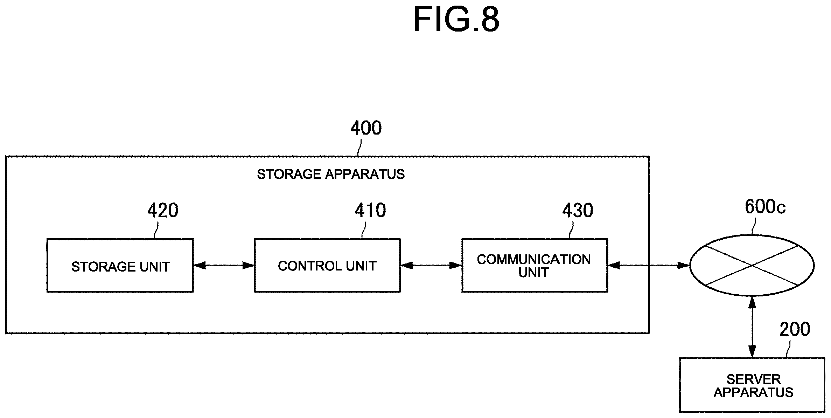

The functional configuration example of the node apparatus 300 has been described in the above description. Subsequently, a functional configuration example of the storage apparatus 400 will be described with reference to FIG. 8.

As illustrated in FIG. 8, the storage apparatus 400 includes a control unit 410, a storage unit 420 and a communication unit 430.

### (Control unit 410)

The control unit 410 is a functional component which comprehensively controls overall processing performed by the storage apparatus 400. For example, the control unit 410 can control start-up and stop of an output unit (not illustrated), the communication unit 430, or the like, using a control signal. Further, the control unit 410 controls acquisition processing of the data from the storage unit 420, or registration processing of data in the storage unit 420 on the basis of the request signal provided from the server apparatus 200. Note that control content of the control unit 410 is not limited to these. For example, the control unit 410 may control processing which is typically performed at various kinds of servers, a general-purpose computer, a PC, a tablet PC, or the like.

### (Storage unit 420)

The storage unit 420 is a functional component which stores various kinds of data. For example, as described above, the storage unit 420 stores data, or the like, for which guaranty of authenticity is not asked (or for which high authenticity is not asked) among academic achievement records, activity records, or the like, of students. Further, the storage unit 420 stores programs, parameters, or the like, to be used by respective functional components of the storage apparatus 400. Note that content of data stored in the storage unit 420 is not limited to these.

### (Communication unit 430)

The communication unit 430 is a functional component which controls various kinds of communication with an external apparatus. For example, the communication unit 430 receives a request signal from the server apparatus 200, and transmits data acquired on the basis of the request signal to the server apparatus 200. Note that data to be communicated by the communication unit 430 and a case where the communication unit 430 performs communication are not limited to these.

The functional configuration example of the storage apparatus 400 has been described above. Note that the above-described functional configuration described using FIG. 8 is merely an example, and the functional configuration example of the storage apparatus 400 is not limited to this example. For example, the storage apparatus 400 does not necessarily have to include all the components illustrated in FIG. 8. Further, the functional configuration of the storage apparatus 400 can be flexibly transformed in accordance with specifications and operation.

### (2.7. Processing flow)

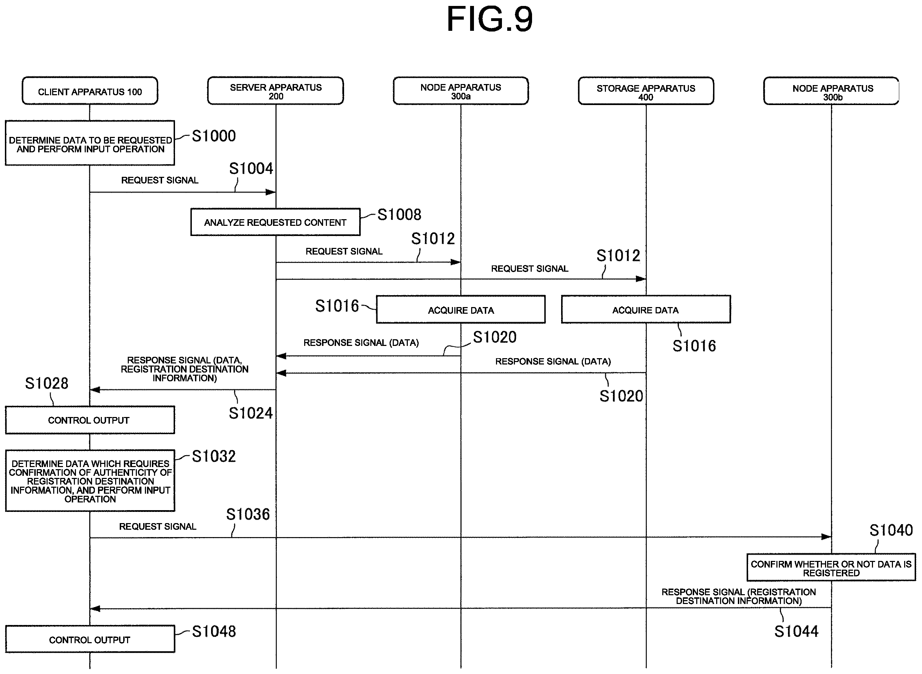

The functional configuration example of the storage apparatus 400 has been described in the above description. Subsequently, processing flow by the respective apparatuses will be described with reference to FIG. 9. FIG. 9 is a sequence diagram illustrating an example of processing flow by the respective apparatuses, regarding provision of data and registration destination information to the user.

In step S1000 in FIG. 9, the user determines data to be requested, and performs predetermined input operation on the input unit 120 of the client apparatus 100. In step S1004, the first requesting unit 111a generates a request signal for requesting acquisition of data on the basis of the input operation and transmits the signal to the server apparatus 200 via the communication unit 150.

In step S1008, the access control unit 211 of the server apparatus 200 recognizes requested content by analyzing the request signal. In step S1012, the P2P database access control unit 211a or the storage access control unit 211b generates new request signals on the basis of the requested content, the P2P database access control unit 211a transmits the signal to the node apparatus 300a, and the storage access control unit 211b transmits the signal to the storage apparatus 400, respectively.

In step S1016, the control units 310 of the node apparatus 300a acquire data designated by the request signal from the P2P database 321, or the control unit 410 of the storage apparatus 400 acquires data designated by the request signal from the storage unit 420. Then, in step S1020, the communication units 330 of the node apparatus 300a or the communication unit 430 of the storage apparatus 400 transmit response signals including the acquired data to the server apparatus 200.

In step S1024, the communication unit 230 of the server apparatus 200 transmits a response signal including data from the node apparatus 300a or the storage apparatus 400, and registration destination information of the data to the client apparatus 100. In step S1028, the output control unit 112 of the client apparatus 100 controls output by the output unit 130 on the basis of the response signal from the server apparatus 200.

In step S1032, the user who has received output from the output unit 130 determines data which requires confirmation of authenticity of the registration destination information, and performs predetermined input operation on the input unit 120. In step S1036, the second requesting unit 111b generates a request signal for requesting acquisition of the registration destination information of the data on the basis of the input operation and transmits the signal to the second target via the communication unit 150 (in this example, the second target is the node apparatus 300b).

In step S1040, the control unit 310 of the node apparatus 300b confirms whether or not the data designated by the request signal is registered in the P2P database 321. In step S1044, the communication unit 330 of the node apparatus 300b transmits a response signal including the registration destination information of the data (information regarding whether or not data is registered in the P2P database 321) to the client apparatus 100.

In step S1048, a series of processing is finished by the output control unit 112 of the client apparatus 100 controlling output by the output unit 130 on the basis of the response signal from the node apparatus 300b.

Note that respective steps in the sequence diagram in FIG. 9 do not necessarily have to be processed in chronological order in accordance with the described order. That is, the respective steps in the sequence diagram may be processed in order different from the described order or may be processed in parallel.

### <3. User interface example>

The processing flow by the respective apparatuses has been described above. Subsequently, examples of a UI according to the present disclosure will be described.

### (3.1. Example of UI indicating registration destination information of data)

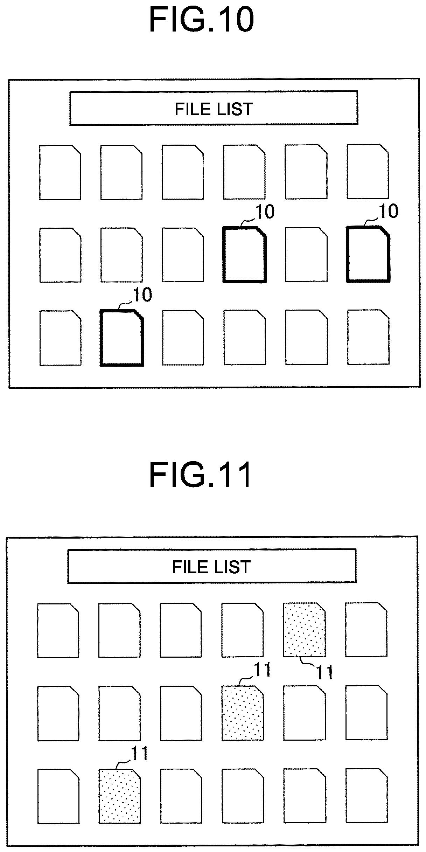

Examples of a UI indicating whether the registration destination of the data is the P2P database 321 or the storage apparatus 400 will be described first with reference to FIG. 10 to FIG. 21. As described above, the output control unit 112 of the client apparatus 100 can control output of data included in the response signal on the basis of the registration destination information included in the response signal from the server apparatus 200, and FIG. 10 to FIG. 21 illustrate display examples of the display (output unit 130) as examples of a UI whose output is controlled by the output control unit 112. Note that, as described above, the output control unit 112 may control output of a sound output apparatus such as a speaker, a light source apparatus such as a lamp, a tactile sense presentation apparatus such as an actuator, or the like, other than the display apparatus such as a display.

First, as illustrated in FIG. 10, the output control unit 112 may perform control so that files (in the drawing, files 10) registered in the P2P database 321 among files (data) displayed as a list at the display are displayed in a concave state as if the files were embedded into a screen.

Further, as illustrated in FIG. 11, the output control unit 112 may perform control so that files (in the drawing, files 11) registered in the P2P database 321 among files (data) displayed as a list at the display are displayed in texture different from that of other files (files registered in the storage apparatus 400).

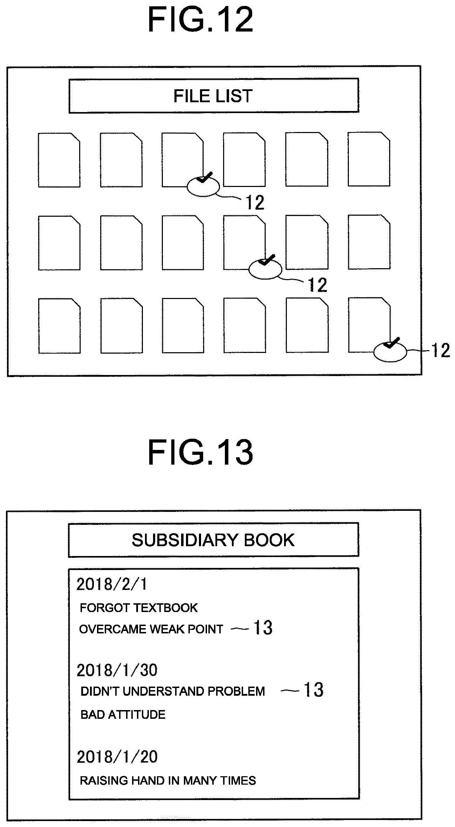

Further, as illustrated in FIG. 12, the output control unit 112 may perform control so that files registered in the P2P database 321 among files (data) displayed as a list at the display are displayed in a state where predetermined icons (in the drawing, checkbox icons 12 with check marks) are provided.

In addition, as illustrated in FIG. 13, the output control unit 112 may perform control so that character strings (in the drawing, character strings 13) registered in the P2P database 321 among character strings (data) displayed as a list at the display are displayed in a concave state as if the character strings were embedded into a screen.

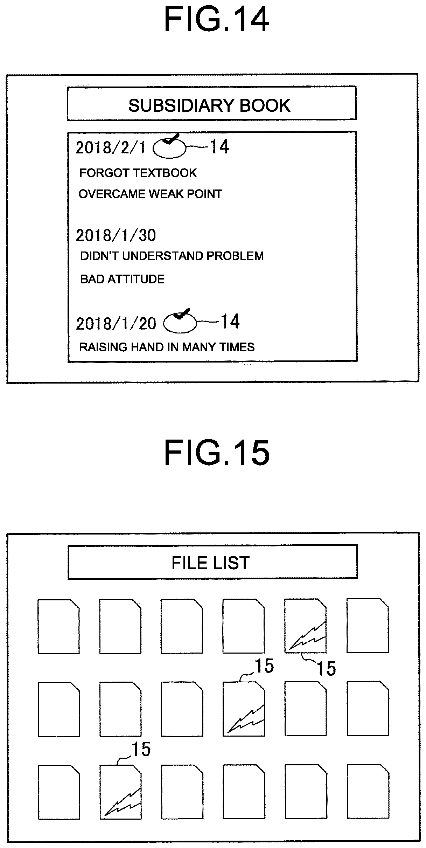

Further, as illustrated in FIG. 14, the output control unit 112 may perform control so that character strings registered in the P2P database 321 among character strings (data) displayed as a list at the display are displayed in a state where predetermined icons (in the drawing, checkbox icons 14 with check marks) are provided.

The user can intuitively recognize the data registered in the P2P database 321 with the above-described UIs.

Subsequently, examples of a UI indicating data registered in the storage apparatus 400 (other storage units) will be described. As illustrated in FIG. 15, the output control unit 112 may perform control so that files (in the drawing, files 15) registered in the storage apparatus 400 among files (data) displayed as a list at the display are displayed in a state predetermined marks (in the drawing, marks indicating cracks) are provided.

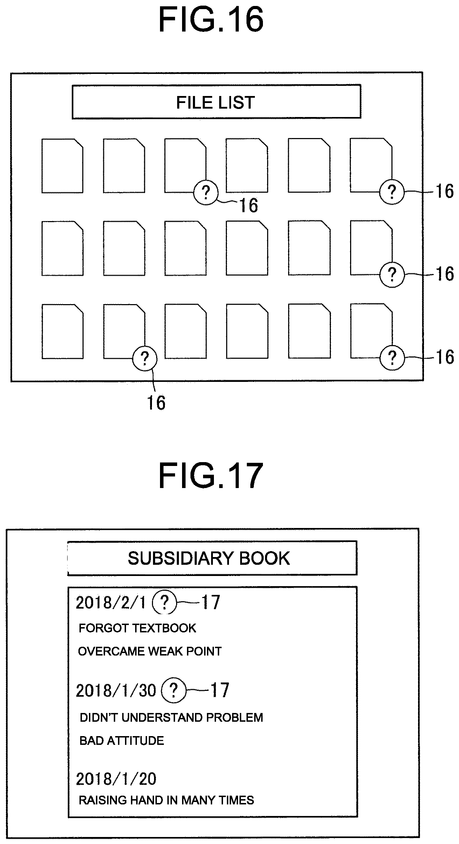

Further, as illustrated in FIG. 16, the output control unit 112 may perform control so that files registered in the storage apparatus 400 among files (data) displayed as a list at the display are displayed in a state where predetermined icons (in the drawing, icons 16 with question marks) are provided.

Further, as illustrated in FIG. 17, the output control unit 112 may perform control so that character strings registered in the storage apparatus 400 among character strings (data) displayed as a list at the display are displayed in a state where predetermined icons (in the drawing, icons 17 with question marks) are provided.

The user can intuitively recognize the data registered in the storage apparatus 400 with the above-described UIs.

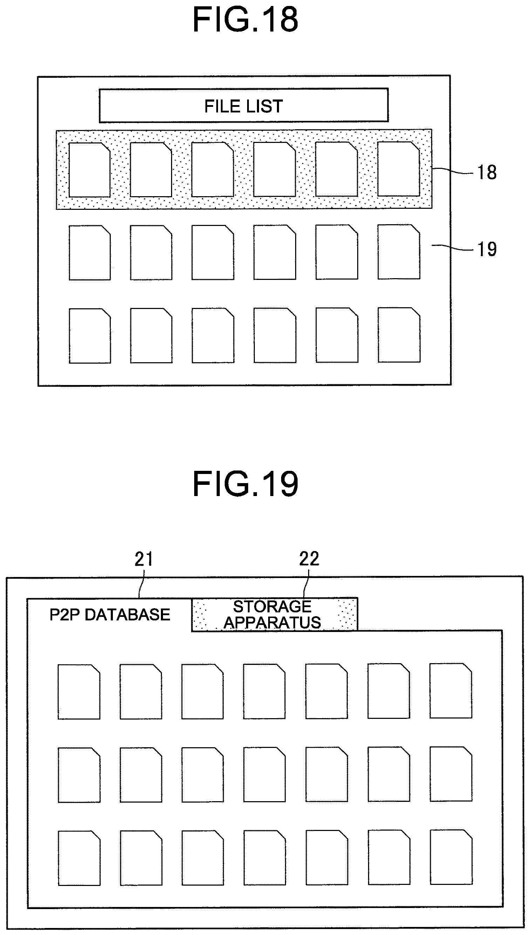

Further, as illustrated in FIG. 18, a region 18 for data registered in the P2P database 321 and a region 19 for data registered in the storage apparatus 400 may be provided at the display, and the output control unit 112 may control output so that data is displayed in the respective regions.

Further, as illustrated in FIG. 19, a tab 20 for data registered in the P2P database 321 and a tab 21 for data registered in the storage apparatus 400 may be provided at the display, and the output control unit 112 may control output so that data is displayed in the respective tabs.

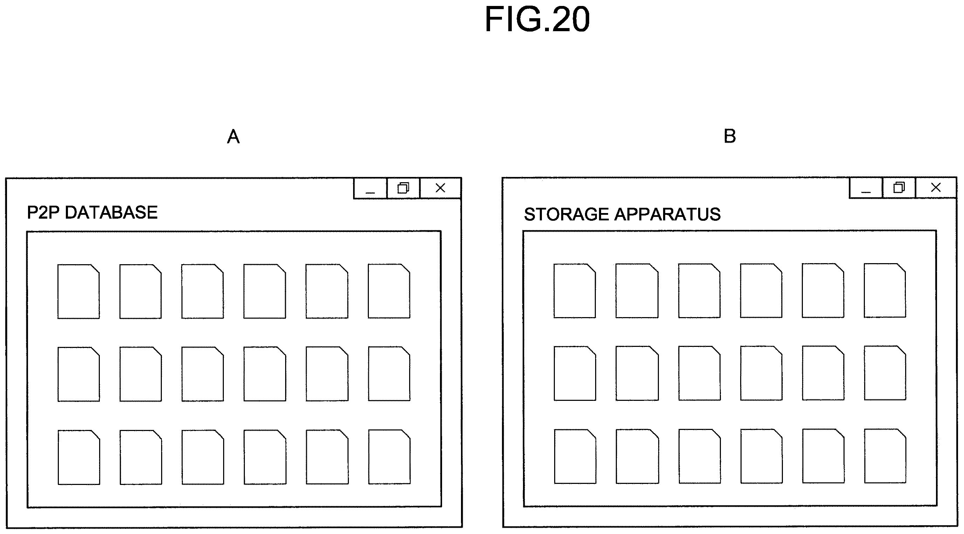

Further, a window for data registered in the P2P database 321 as illustrated in A in FIG. 20, and a window for data registered in the storage apparatus 400 as illustrated in B in FIG. 20 may be provided at the display, and the output control unit 112 may control output so that data is displayed in the respective windows.

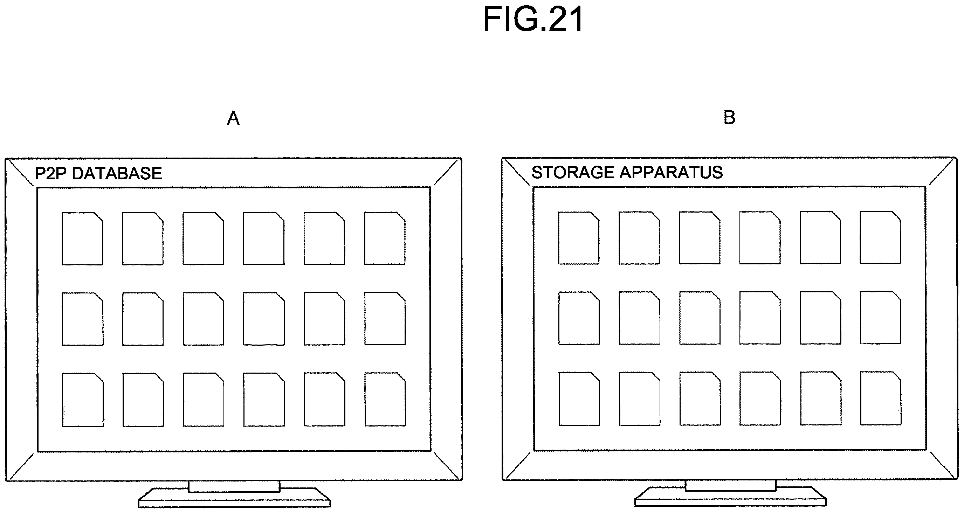

Further, in a case where the client apparatus 100 includes a plurality of displays, a display for data registered in the P2P database 321 as illustrated in A in FIG. 21, and a display for data registered in the storage apparatus 400 as illustrated in B in FIG. 21 may be provided, and the output control unit 112 may control output so that data is displayed in the respective displays.

### (3.2. Example of UI indicating result of confirmation to second target)

As described above, after the registration destination information of the data is provided from the server apparatus 200, the user can confirm authenticity of the registration destination information of the data to the second target. Therefore, subsequently, examples of a UI indicating a confirmation result of the registration destination information provided from the second target will be described.

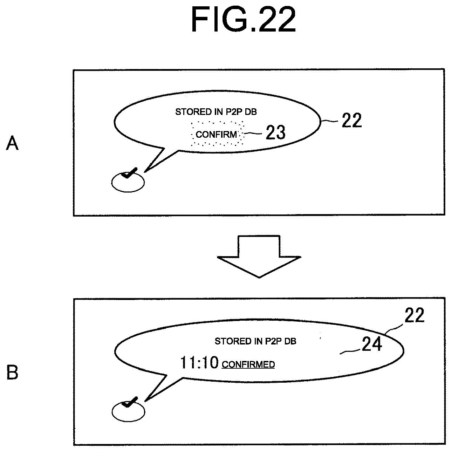

For example, in a case where the user depresses a checkbox icon 12 illustrated in FIG. 12 described above, the output control unit 112 causes a pop-up 22 illustrated in A in FIG. 22 to be displayed at the display. Then, in a case where the user depresses (clicks) a confirmation button 23 included in the pop-up 22, the second requesting unit 111b confirms the registration destination information of the data to the second target, and the output control unit 112 controls output so that a character string 24 of the confirmation result is displayed within the pop-up 22 (in this example, information indicating that the data is registered in the P2P database 321 is displayed along with confirmation time). Through this UI, the user can easily confirm authenticity of the registration destination information of the data.

### (3.3. Example of UI indicating history information regarding postscript to data)

As described above, while the user cannot basically perform deletion, correction, or the like, of data registered in the P2P database 321, the user can add a postscript to the data registered in the P2P database 321 (for example, the user can add a postscript indicating that data is deleted or corrected). Therefore, subsequently, examples of a UI indicating history information regarding addition of a postscript to data (hereinafter, also simply referred to as "history information") will be described.

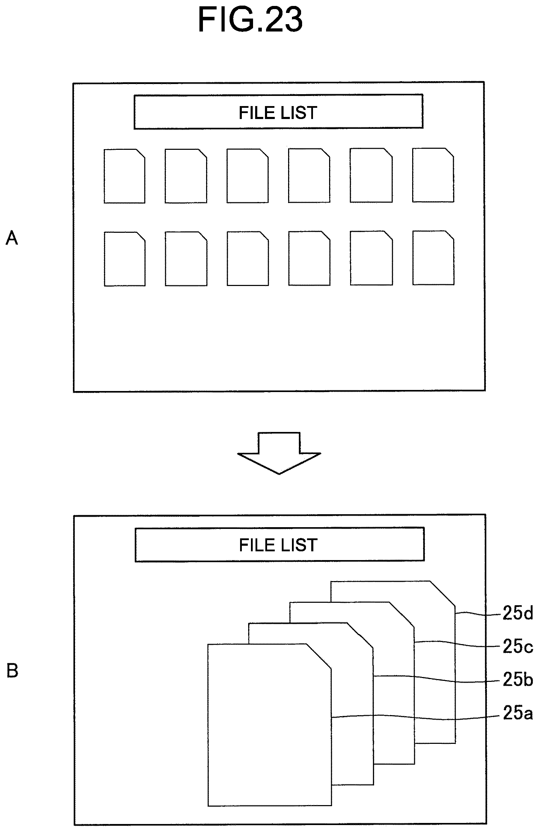

For example, the user selects a file for which the user desires to confirm history information among a plurality of files (data) displayed as a list as illustrated in A in FIG. 23. For example, the user selects a file for which the user desires to confirm history information by depressing (clicking) the file or continuously depressing (long-pressing) the file for a period equal to or longer than a predetermined period. By this means, as illustrated in B in FIG. 23, the output control unit 112 controls output so that history information regarding the file is displayed. In the example in B in FIG. 23, files are displayed for each version, and files of newer versions are displayed on a front side. That is, in B in FIG. 23, a file 25a is a file of the latest version, and a file 25d is a file of the oldest version.

By this means, because the user can intuitively recognize old or new of the version of each file, the user can confirm history information of the file more easily. Note that a UI indicating the history information is not limited to the example in FIG. 23. For example, files of respective versions may be horizontally or vertically displayed in line. Further, a portion to which a postscript is added may be indicated using a predetermined method (such as, for example, highlight and different font).

### (3.4. Example of UI to be used for registration of data in P2P database 321)

As described above, the user can register desired data in the P2P database 321 by performing input operation for requesting registration of the data using the input unit 120. Therefore, subsequently, examples of a UI to be used for registration of data in the P2P database 321 will be described.

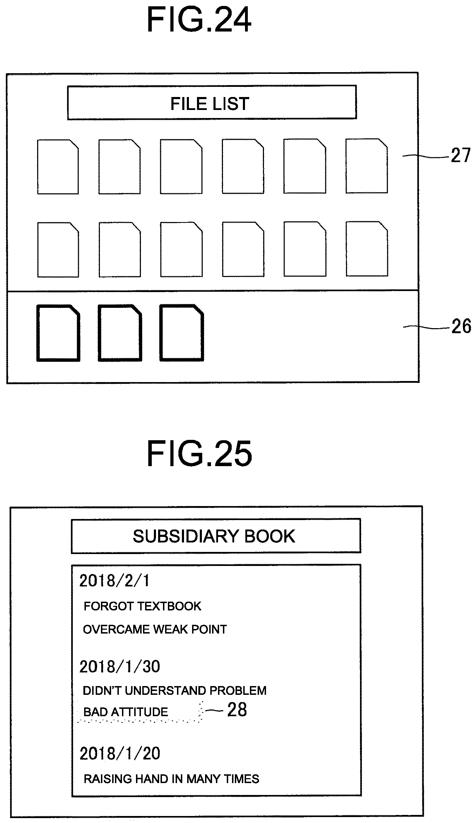

For example, it is assumed that, as illustrated in FIG. 24, a region 26 for data registered in the P2P database 321 and a region 27 for data registered in the storage apparatus 400 are provided at the display, and files (data) are displayed in the respective regions. Then, the user may be able to register a file in the P2P database 321 by dragging and dropping the file displayed in the region 27 to the region 26.

Further, as illustrated in FIG. 25, the user may be able to register a file in the P2P database 321 by selecting a character string 28 registered in the storage apparatus 400 (in the drawing, the selected portion is highlighted), and continuously depressing (long-pressing) the selected portion for a period equal to or longer than a predetermined period.

Through the UIs described above, the user can register data in the P2P database 321 more easily. Note that a UI to be used for registration of data in the P2P database 321 is not limited to the above-described examples.

### (3.5. Example of UI indicating that data is undeletable)

Subsequently, examples of a UI indicating that data is undeletable because the data is registered in the P2P database 321 will be described.

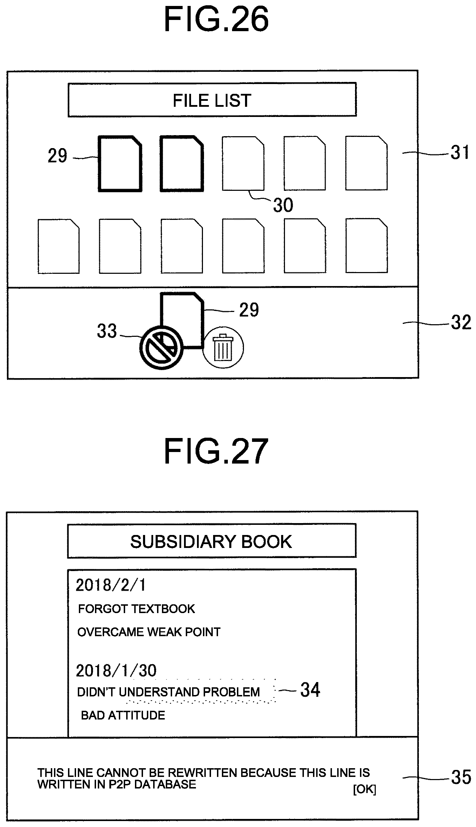

For example, as illustrated in FIG. 26, a file 29 (data) registered in the P2P database 321, a region 31 in which a file 30 (data) registered in the storage apparatus 400 is displayed, and a deletion region 32 to be used for designation of a file to be deleted, are displayed at the display.

Further, it is assumed that the user tries to delete the file 29 by dragging and dropping the file 29 registered in the P2P database 321 to the deletion region 32. In this case, display may be provided such that, at a time point at which the file 29 is dragged on the deletion region 32, a nix sign 33 indicating that the file is undeletable is provided at the file 29, and further, in a case where the file 29 is dropped at the deletion region 32, the file 29 is forcibly returned to the original position in the region 31. Note that, in a case where the user drags and drops the file 30 registered in the storage apparatus 400 to the deletion region 32, the file 30 is appropriately deleted.

Further, as illustrated in FIG. 27, in a case where the user selects a character string 34 registered in the P2P database 321 (in the drawing, the selected portion is highlighted), and tries to delete (or rewrites) the selected portion, an alarm message 35 may be displayed. In this example, the alarm message 35 of "this line cannot be rewritten because this line is written in the P2P database" is displayed.

Through the UIs described above, the user can recognize more easily that data which the user tries to delete is undeletable because the data is registered in the P2P database 321. By this means, according to the present disclosure, it is possible to make the user aware of need of registering data in the P2P database 321 more carefully. Note that the UI indicating that data is undeletable is not limited to the above-described examples.

### (3.6. Example of UI indicating that registration of data in P2P database 321 is being performed)

Subsequently, examples of a UI indicating that registration of data in the P2P database 321 is being performed will be described.

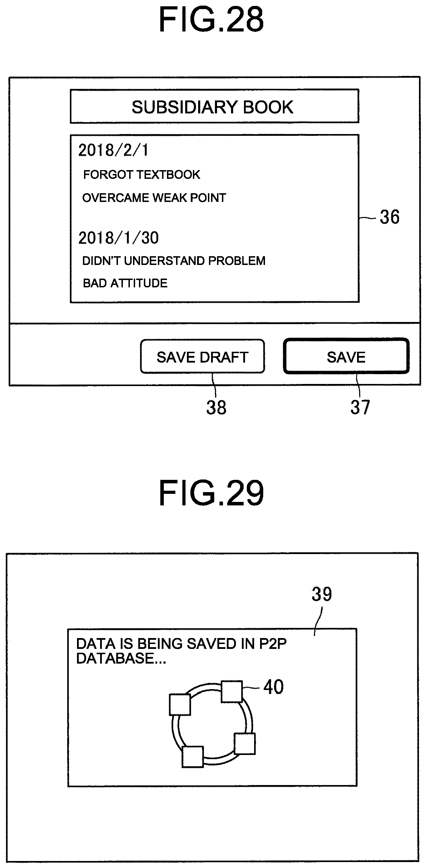

For example, as illustrated in FIG. 28, a data editing region 36, a save button 37, and a save draft button 38 are displayed at the display. Here, the save button 37 is a button which is depressed when the user registers data edited in the editing region 36 in the P2P database 321, and the save draft button 38 is a button which is depressed when the user registers data which is being edited in the storage apparatus 400.

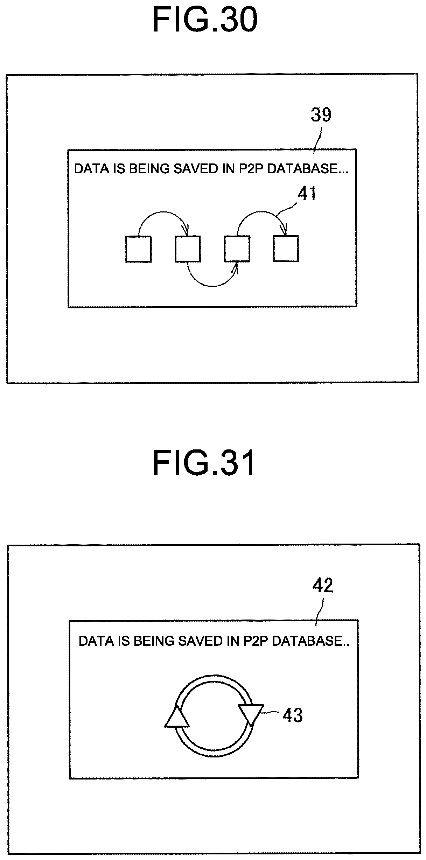

In a case where the user depresses the save button 37, as illustrated in FIG. 29, a message 39 indicating that the data is being saved in the P2P database 321 (in this example, the message 39 of "data is being saved in the P2P database...") and a loading icon 40 which reminds the user of the P2P database 321 (in this example, the loading icon 40 which reminds the user of blockchain by continuation of a plurality of blocks) are displayed. Note that animation 41 illustrated in FIG. 30 may be displayed in place of the loading icon 40 (in this example, the animation 41 which reminds the user of blockchain by continuation of a plurality of blocks is displayed).

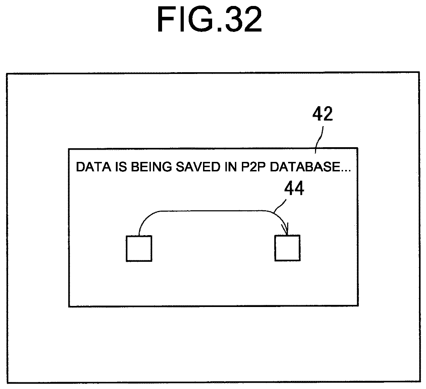

Further, in a case where, in FIG. 28, the user depresses the save draft button 38, as illustrated in FIG. 31, a message 42 indicating that the data is being saved in the storage apparatus 400 (in this example, the message 42 of "the data is being saved in the database..."), and a loading icon 43 (typical loading icon) which does not remind the user of the P2P database 321, are displayed. Note that animation 44 (typical animation) which does not remind the user of the P2P database 321 as illustrated in FIG. 32 may be displayed in place of the loading icon 43.

Through the UIs described above, the user can recognize that data is being registered in the P2P database 321 or the storage apparatus 400 more easily. Note that the UI indicating that data registration is being performed is not limited to the above-described examples.

### <4. Hardware configuration example>

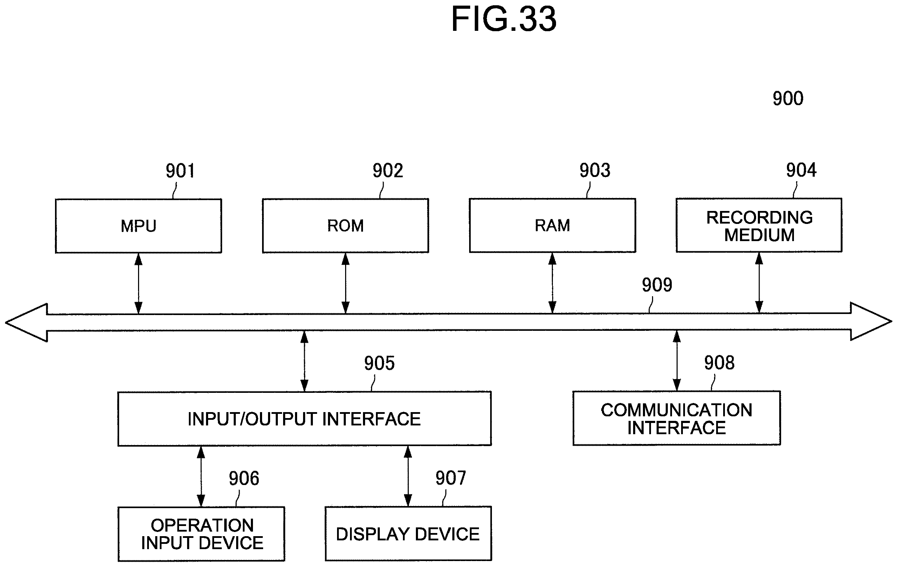

The example of UI of the present disclosure has been described above. Subsequently, hardware configuration examples of the respective apparatuses will be described with reference to FIG. 33.

FIG. 33 is a block diagram illustrating a hardware configuration example of the client apparatus 100, the server apparatus 200, the node apparatus 300 or the storage apparatus 400. These apparatuses can be embodied by an information processing apparatus 900 illustrated in FIG. 33.

The information processing apparatus 900 includes, for example, an MPU 901, a ROM 902, a RAM 903, a recording medium 904, an input/output interface 905, an operation input device 906, a display device 907 and a communication interface 908. Further, in the information processing apparatus 900, for example, respective components are connected with a bus 909 as a data transmission path.

The MPU 901 is constituted with one or two or more processors which are constituted with arithmetic circuits such as MPUs, various kinds of processing circuits, or the like, and functions as the control unit 110 of the client apparatus 100, the control unit 210 of the server apparatus 200, the control unit 310 of the node apparatus 300 or the control unit 410 of the storage apparatus 400. Note that the control unit 110 of the client apparatus 100, the control unit 210 of the server apparatus 200, the control unit 310 of the node apparatus 300 or the control unit 410 of the storage apparatus 400 may be constituted with dedicated (or general-purpose) circuits (such as, for example, processors different from the MPU 901) which can realize various kinds of processing described above.

The ROM 902 stores control data, or the like, such as programs, operation parameters, or the like, to be used by the MPU 901. The RAM 903, for example, temporarily stores programs, or the like, to be executed by the MPU 901.

The recording medium 904 functions as the storage unit 140 of the client apparatus 100, the storage unit 220 of the server apparatus 200, the storage unit 320 of the node apparatus 300, or the storage unit 420 of the storage apparatus 400, and stores various kinds of data such as data regarding information processing according to the present embodiment and various kinds of programs. Here, examples of the recording medium 904 can include, for example, a magnetic recording medium such as a hard disk, and a non-volatile memory such as a flash memory. Further, the recording medium 904 may be detachable from the information processing apparatus 900.

The input/output interface 905 connects, for example, an operation input device 906 and a display device 907. Here, examples of the input/output interface 905 can include, for example, a universal serial bus (USB) terminal, a digital visual interface (DVI) terminal, a high-definition multimedia interface (HDMI) (registered trademark) terminal, various kinds of processing circuits, or the like.

Further, the operation input device 906 is, for example, provided on the information processing apparatus 900, and is connected to the input/output interface 905 inside the information processing apparatus 900. Examples of the operation input device 906 can include, for example, a keyboard, a mouse, a keypad, a touch panel, a microphone, an operation button, a cursor key, a rotary selector such as a jog dial, combination of these, or the like. The operation input device 906 functions as the input unit 120 of the client apparatus 100.

Further, the display device 907 is, for example, provided on the information processing apparatus 900, and is connected to the input/output interface 905 inside the information processing apparatus 900. Examples of the display device 907 can include, for example, a liquid crystal display, an organic electro-luminescence (EL) display, or the like. The display device 907 functions as the output unit 130 of the client apparatus 100.

Note that it goes without saying that the input/output interface 905 can be connected to an external device such as an operation input device and an external display device outside the information processing apparatus 900. Further, the display device 907 may be a device such as, for example, a touch panel, which can perform display and allows user operation.

The communication interface 908 is communication means provided at the information processing apparatus 900 and functions as the communication unit 150 of the client apparatus 100, the communication unit 230 of the server apparatus 200, the communication unit 330 of the node apparatus 300, or the communication unit 430 of the storage apparatus 400. Further, the communication interface 908 may have a function of performing communication in a wireless or wired manner, for example, with an arbitrary external apparatus such as a server via an arbitrary network (or directly). Here, examples of the communication interface 908 can include, for example, a communication antenna and a radio frequency (RF) circuit (wireless communication), an IEEE802.15.1 port and a transmission/reception circuit (wireless communication), an IEEE802.11 port and a transmission/reception circuit (wireless communication), a local area network (LAN) terminal and a transmission/reception circuit (wired communication), or the like.

Note that the hardware configuration of the information processing apparatus 900 is not limited to the configuration illustrated in FIG. 33. For example, in a case where the information processing apparatus 900 performs communication via a connected external communication device, the information processing apparatus 900 does not include the communication interface 908. Further, the communication interface 908 may have a configuration which enables communication using a plurality of communication schemes. Further, the information processing apparatus 900, for example, does not have to include the operation input device 906, the display device 907, or the like. Further, for example, part or all of the components illustrated in FIG. 33 may be realized with one or two or more integrated circuits (ICs).

### <5. Conclusion>

As described above, according to the present disclosure, it is possible to request information (registration destination information) regarding whether a registration destination of data is the P2P database 321 or other storage units (storage apparatus 400) to a plurality of targets (the first target and the second target) which is different from each other, and provide information obtained as a result of the request to the user. By this means, the user can confirm authenticity of registration destination information of data, provided from the system by himself/herself.

The preferred embodiment of the present disclosure has been described above with reference to the accompanying drawings, whilst the technical scope of the present disclosure is not limited to the above examples.

It is obvious that persons having ordinary knowledge in the technical field of the present disclosure can conceive various changes and alterations within the scope of the technical idea described in the claims, and it is naturally understood that these changes and alterations belong to the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification and the appended claims.

### Reference Signs List

- 100: CLIENT APPARATUS
- 110: CONTROL UNIT
- 111: REQUESTING UNIT
- 111a: FIRST REQUESTING UNIT
- 111b: SECOND REQUESTING UNIT
- 112: OUTPUT CONTROL UNIT
- 120: INPUT UNIT
- 130: OUTPUT UNIT
- 140: STORAGE UNIT
- 150: COMMUNICATION UNIT
- 200: SERVER APPARATUS
- 210: CONTROL UNIT
- 211: ACCESS CONTROL UNIT
- 211a: P2P DATABASE ACCESS CONTROL UNIT
- 211b: STORAGE ACCESS CONTROL UNIT
- 220: STORAGE UNIT
- 230: COMMUNICATION UNIT
- 300: NODE APPARATUS
- 310: CONTROL UNIT
- 320: STORAGE UNIT
- 321: P2P DATABASE
- 322: P2P DATABASE PROGRAM
- 330: COMMUNICATION UNIT
- 400: STORAGE APPARATUS
- 410: CONTROL UNIT
- 420: STORAGE UNIT
- 430: COMMUNICATION UNIT
- 500: P2P NETWORK
- 600: NETWORK

## Claims

1. An information processing apparatus (100), comprising:
a requesting unit (111) configured to request information regarding whether a registration destination of data is a P2P database or a storage unit other than the P2P database, to a plurality of targets which is different from each other; and
an output control unit (112) configured to control output of information obtained as a result of the request to a user.

2. The information processing apparatus (100)according to claim 1,
wherein, on a basis of information obtained as a result of request to a first target which is one of the plurality of targets, the requesting unit (111) is configured to perform request to a second target which is another of the plurality of the targets.

3. The information processing apparatus (100) according to claim 2,
wherein the output control unit (112) is configured to output the information obtained as a result of the request to the first target to the user, and
the requesting unit (111) is configured to then perform request to the second target on a basis of operation by the user.

4. The information processing apparatus (100) according to any one of the previous claims,
wherein, in a case where the registration destination of the data is the P2P database, the requesting unit (111) is configured to request history information regarding a postscript to the data to at least one of the plurality of targets.

5. The information processing apparatus (100) according to any one of the previous claims,
wherein, in a case where the registration destination of the data is the P2P database, the output control unit (112) is configured to output information indicating that the data is undeletable to the user.

6. The information processing apparatus (100) according to any one of the previous claims,
wherein the requesting unit (111) is configured to also request registration of data in the P2P database to at least one of the plurality of targets on a basis of operation by the user.

7. The information processing apparatus (100) according to claim 6,
wherein the output control unit (112) is configured to output information indicating that the data is being registered in the P2P database to the user during the registration.

8. The information processing apparatus (100) according to any one of the previous claims,
wherein the output control unit (112) is configured to output information obtained as a result of the request to the user in units of a file or in units of data included in the file.

9. The information processing apparatus (100) according to any one of the previous claims,
wherein the P2P database is blockchain data.

10. An information processing method to be executed by a computer, the information processing method comprising:
requesting information regarding whether a registration destination of data is a P2P database or a storage unit other than the P2P database to a plurality of targets which is different from each other; and
controlling output of information obtained as a result of the request to a user.

11. A program for causing a computer to realize:
requesting information regarding whether a registration destination of data is a P2P database or a storage unit other than the P2P database to a plurality of targets which is different from each other; and
controlling output of information obtained as a result of the request to a user.

## Patentansprüche

1. Informationsverarbeitungsvorrichtung (100), umfassend:
eine Anforderungseinheit (111), die dazu ausgelegt ist, Informationen bezüglich der Frage anzufordern, ob ein Registrierziel von Daten eine P2P-Datenbank oder eine andere Speichereinheit als die P2P-Datenbank ist, zu einer Mehrzahl von Zielen, die voneinander verschieden sind; und
eine Ausgabesteuereinheit (112), die dazu ausgelegt ist, die Ausgabe von als Ergebnis der Anforderung erhaltenen Informationen an einen Benutzer zu steuern.

2. Informationsverarbeitungsvorrichtung (100) nach Anspruch 1,
wobei die Anforderungseinheit (111) auf der Grundlage von Informationen, die als Ergebnis einer Anforderung an ein erstes Ziel, das eines der Mehrzahl von Zielen ist, erhalten werden, dazu ausgelegt ist, eine Anforderung an ein zweites Ziel, das ein anderes der Mehrzahl von Zielen ist, durchzuführen.

3. Informationsverarbeitungsvorrichtung (100) nach Anspruch 2,
wobei die Ausgabesteuereinheit (112) dazu ausgelegt ist, die als Ergebnis der Anforderung an das erste Ziel erhaltenen Informationen an den Benutzer auszugeben, und die Anforderungseinheit (111) dazu ausgelegt ist, dann eine Anforderung an das zweite Ziel auf der Grundlage einer Benutzeroperation durchzuführen.

4. Informationsverarbeitungsvorrichtung (100) nach einem der vorhergehenden Ansprüche,
wobei in einem Fall, in dem das Registrierungsziel der Daten die P2P-Datenbank ist, die Anforderungseinheit (111) dazu ausgelegt ist, Verlaufsinformationen bezüglich eines Postskripts zu den Daten an mindestens eines der mehreren Ziele anzufordern.

5. Informationsverarbeitungsvorrichtung (100) nach einem der vorhergehenden Ansprüche,
wobei in einem Fall, in dem das Registrierungsziel der Daten die P2P-Datenbank ist, die Ausgabesteuereinheit (112) dazu ausgelegt ist, Informationen auszugeben, die angeben, dass die Daten für den Benutzer nicht löschbar sind.

6. Informationsverarbeitungsvorrichtung (100) nach einem der vorhergehenden Ansprüche,
wobei die Anforderungseinheit (111) dazu ausgelegt ist, auch die Registrierung von Daten in der P2P-Datenbank zu mindestens einem der Mehrzahl von Zielen auf der Grundlage einer Benutzeroperation anzufordern.

7. Informationsverarbeitungsvorrichtung (100) nach Anspruch 6,
wobei die Ausgabesteuereinheit (112) dazu ausgelegt ist, Informationen auszugeben, die angeben, dass die Daten in der P2P-Datenbank an den Benutzer während der Registrierung registriert werden.

8. Informationsverarbeitungsvorrichtung (100) nach einem der vorhergehenden Ansprüche,
wobei die Ausgabesteuereinheit (112) dazu ausgelegt ist, die als Ergebnis der Anforderung erhaltenen Informationen an den Benutzer in Einheiten einer Datei oder in Einheiten von in der Datei enthaltenen Daten auszugeben.

9. Informationsverarbeitungsvorrichtung (100) nach einem der vorhergehenden Ansprüche,
wobei die P2P-Datenbank Blockchaindaten sind.

10. Informationsverarbeitungsverfahren, das von einem Computer auszuführen ist, wobei das Informationsverarbeitungsverfahren umfasst:
Anfordern von Informationen bezüglich der Frage, ob ein Registrierziel von Daten eine P2P-Datenbank oder eine andere Speichereinheit als die P2P-Datenbank ist zu einer Mehrzahl von Zielen, die voneinander verschieden sind; und
Steuern von Ausgabeinformation, die als Ergebnis der Anforderung an einen Benutzer erhalten wurden.

11. Programm, um einen Computer zu veranlassen, Folgendes zu realisieren:
Anfordern von Informationen bezüglich der Frage, ob ein Registrierziel von Daten eine P2P-Datenbank oder eine andere Speichereinheit als die P2P-Datenbank ist zu einer Mehrzahl von Zielen, die voneinander verschieden sind; und
Steuern der Ausgabe von Information, die als Ergebnis der Anforderung an einen Benutzer erhalten wurden.

## Revendications

1. Appareil (100) de traitement d'informations, comprenant :
une unité de demande (111) configurée pour demander, auprès d'une pluralité de cibles différentes les unes des autres, des informations indiquant si une destination d'enregistrement de données est une base de données P2P ou une unité de stockage autre que la base de données P2P ; et
une unité de commande de sortie (112) configurée pour commander la fourniture en sortie, à un utilisateur, d'informations obtenues à la suite de la demande.

2. Appareil (100) de traitement d'informations selon la revendication 1,
dans lequel, sur la base d'informations obtenues à la suite d'une demande auprès d'une première cible qui est l'une de la pluralité de cibles, l'unité de demande (111) est configurée pour effectuer une demande auprès d'une deuxième cible qui est une autre de la pluralité des cibles.

3. Appareil (100) de traitement d'informations selon la revendication 2,
dans lequel l'unité de commande de sortie (112) est configurée pour fournir en sortie, à l'utilisateur, les informations obtenues à la suite de la demande auprès de la première cible, et
l'unité de demande (111) est configurée pour effectuer ensuite une demande auprès de la deuxième cible sur la base d'une opération par l'utilisateur.

4. Appareil (100) de traitement d'informations selon l'une quelconque des revendications précédentes,
dans lequel, dans le cas où la destination d'enregistrement des données est la base de données P2P, l'unité de demande (111) est configurée pour demander, auprès d'au moins une de la pluralité de cibles, des informations historiques concernant un postscript aux données.

5. Appareil (100) de traitement d'informations selon l'une quelconque des revendications précédentes,
dans lequel, dans le cas où la destination d'enregistrement des données est la base de données P2P, l'unité de commande de sortie (112) est configurée pour fournir en sortie des informations indiquant à l'utilisateur que les données ne peuvent pas être supprimées.

6. Appareil (100) de traitement d'informations selon l'une quelconque des revendications précédentes,
dans lequel l'unité de demande (111) est configurée pour demander également, auprès d'au moins une de la pluralité de cibles, l'enregistrement de données dans la base de données P2P sur la base d'une opération par l'utilisateur.

7. Appareil (100) de traitement d'informations selon la revendication 6,
dans lequel l'unité de commande de sortie (112) est configurée pour fournir en sortie, à l'utilisateur durant l'enregistrement, des informations indiquant que les données sont en cours d'enregistrement dans la base de données P2P.

8. Appareil (100) de traitement d'informations selon l'une quelconque des revendications précédentes,
dans lequel l'unité de commande de sortie (112) est configurée pour fournir en sortie, à l'utilisateur, des informations obtenues à la suite de la demande en unités d'un fichier ou en unités de données contenues dans le fichier.

9. Appareil (100) de traitement d'informations selon l'une quelconque des revendications précédentes,
dans lequel la base de données P2P consiste en des données de chaîne de blocs.

10. Procédé de traitement d'informations destiné à être exécuté par un ordinateur, le procédé de traitement d'informations comprenant :
la demande, auprès d'une pluralité de cibles différentes les unes des autres, d'informations indiquant si une destination d'enregistrement de données est une base de données P2P ou une unité de stockage autre que la base de données P2P ; et
la commande de la fourniture en sortie, à un utilisateur, d'informations obtenues à la suite de la demande.

11. Programme pour amener un ordinateur à réaliser :
la demande, auprès d'une pluralité de cibles différentes les unes des autres, d'informations indiquant si une destination d'enregistrement de données est une base de données P2P ou une unité de stockage autre que la base de données P2P ; et
la commande de la fourniture en sortie, à un utilisateur, d'informations obtenues à la suite de la demande.
